# EUROPÄISCHE PATENTSCHRIFT

(11) **EP 3 268 106 B1**
(45) Veröffentlichungstag und Bekanntmachung des Hinweises auf die Patenterteilung: **30.10.2024**
(21) Anmeldenummer: 16713741.3
(22) Anmeldetag: 08.03.2016
(51) Int. Cl.: B01D 35/147, B01D 35/153, B01D 29/15, F01M 11/03

(54) **FILTER MIT EINEM FILTERUMGEHUNGSVENTIL UND FILTEREINSATZ DAFÜR**
FILTER HAVING A FILTER BYPASS VALVE, AND FILTER CARTRIDGE THEREFOR
FILTRE COMPRENANT UNE SOUPAPE DE CONTOURNEMENT DE FILTRE ET CARTOUCHE FILTRANTE ASSOCIÉE

(30) Priorität: 12.03.2015 DE 102015103662
(43) Veröffentlichungstag der Anmeldung: 17.01.2018
(73) Patentinhaber: Hengst SE, 48147 Münster (DE)
(72) Erfinder: ARDES, Wilhelm, 59387 Ascheberg (DE)
(74) Vertreter: Schulze Horn, Kathrin
(86) Internationale Anmeldenummer: PCT/EP2016/054939
(87) Internationale Veröffentlichungsnummer: WO 2016/142389

(56) Entgegenhaltungen:
- WO-A1-2007/022914
- WO-A1-2013/083389
- DE-A1- 102010 054 349
- DE-A1- 102012 210 900
- DE-A1- 19 859 960
- DE-U1- 202007 017 980
- DE-U1- 202014 104 029
- DE-U1- 29 815 023
- DE-U1- 29 917 563
- US-A1- 2004 069 700
- US-A1- 2004 112 429

## Beschreibung

Die Erfindung betrifft einen Filter nach dem Oberbegriff des Patentanspruchs 1.

Außerdem betrifft die Erfindung einen Filtereinsatz für den Filter.

Ein Filter der eingangs genannten Art ist aus der DE 10 2012 210 900 A1 bekannt. In dem Gehäusedeckel des Filters ist ein Filterumgehungsventil fest eingebaut, wobei die Teile des Filterumgehungsventils in einem Ventilgehäuse angeordnet sind, welches mit dem Deckel fest verbunden ist. Die Feder des Filterumgehungsventils ist einerseits an dem Ventilkörper des Filterumgehungsventils und andererseits am Ventilgehäuse abgestützt, sodass die Feder stets vorgespannt ist und Ventilkörper stets mit der in Ventilschließrichtung wirkenden Vorbelastungskraft beaufschlagt ist. Eine Änderung der Vorbelastungskraft des Ventilkörpers zur Änderung des gewünschten Öffnungsdrucks des Filterumgehungsventils ist hier nur durch den Einsatz einer anderen Feder oder durch den Einsatz eines andern Ventilgehäuses mit einer geänderten Abstützung der Ventilfeder möglich. Beides ist relativ aufwendig und erfordert erhebliche konstruktive Eingriffe in den Gehäusedeckel, was nur im Rahmen der Filterherstellung durchführbar ist.

Die DE 20 2014 104 029 U1 zeigt einen Filter, der als Ersatz für einen nur insgesamt ersetzbaren Anschraubwechselfilter dient. Der Filter besitzt eine Grundplatte, die nach einem erstmaligen Anschrauben an einen Anschlussflansch, zum Beispiel einer Brennkraftmaschine, dort dauerhaft verbleibt. Ein Filterumgehungsventil ist komplett an der Grundplatte angeordnet. Eine Feder des Filterumgehungsventils wird durch einen auswechselbaren Filtereinsatz des Filters abgestützt und vorgespannt, wenn der Filtereinsatz in den Filter eingebaut ist.

Die DE 10 2009 054 523 A1 zeigt einen Filter, bei dem der Ventilkörper und die Ventilfeder des Filterumgehungsventils Teile eines Filtergehäusedeckels sind. Der Ventilsitz des Filterumgehungsventils ist an einer deckelseitigen Stirnscheibe des Filtereinsatzes vorgesehen. Die Feder des Filterumgehungsventils ist einerseits innen am Filtergehäusedeckel und andererseits an der zum Filtergehäusedeckel weisenden Oberseite des Ventilkörpers abgestützt. Die Feder des Filterumgehungsventils ist hier schon vorgespannt, auch wenn sich noch kein Filtereinsatz im Filter befindet, und wirkt von oben, d.h. von der Deckelseite her, her auf den Ventilkörper und drückt ihn nach unten, d. h. vom Filtergehäusedeckel weg, gegen den Ventilsitz, also in Richtung vom Filtergehäusedeckel zum Filtereinsatz hin.

Die DE 20 2007 017 980 U1 offenbart eine Filterpatrone für einen Ölfilter eines Verbrennungsmotors mit einem Filterumgehungsventil als zum gemeinsamen Austausch vorgesehene Baueinheit.

Schließlich offenbart die US 2004/0069700 A1 eine Kraftstofffilter-Anordnung in einem Kraftstoffsystem. Beim Entfernen der Kraftstofffilter-Anordnung wird ein Ventil geschlossen, um Austreten eines Kraftstoffs zu vermeiden.

Für die vorliegende Erfindung stellt sich daher die Aufgabe, einen Filter der eingangs genannten Art zu schaffen, der die aufgeführten Nachteile des Standes der Technik vermeidet und bei dem eine Änderung des gewünschten Öffnungsdrucks des Filterumgehungsventils, auch nachträglich, einfach möglich ist. Außerdem soll ein Filtereinsatz für den Filter geschaffen werden, der mit dem Filter zusammenwirkt und hierzu auf den Filter abgestimmt ist.

Die Lösung des ersten, den Filter betreffenden Teils der Aufgabe gelingt erfindungsgemäß mit einem Filter der gemäß dem Patentanspruch 1 ausgestaltet ist sowie mit einem Filtereinsatz der gemäß dem Patentanspruch 19 ausgestaltet ist.

Mit der Erfindung wird vorteilhaft erreicht, dass es nur einen geringen Aufwand erfordert, den Öffnungsdruck des im Gehäusedeckel angeordneten Filterumgehungsventils zu verändern, indem einfach der Filtereinsatz hinsichtlich der daran vorgesehenen, die Feder im Einbauzustand abstützenden und vorspannenden Federstütze verändert wird. Auf diese Weise kann die Feder beim Einbauen des Filtereinsatzes mehr oder weniger stark vorgespannt werden, was ein problemloses Einstellen des gewünschten Öffnungsdrucks des Filterumgehungsventils erlaubt, selbst innerhalb einer laufenden Serienherstellung. Aufwändige konstruktive Änderungen am übrigen Filter, insbesondere am Gehäusedeckel und dem daran angeordneten Filterumgehungsventil, sind nicht erforderlich. Der Filtereinsatz braucht, abgesehen von der Federstütze, keine weiteren Teile des Filterumgehungsventils aufzunehmen oder aufzuweisen, wodurch der Filtereinsatz als Verbrauchsteil technisch einfach und preiswert bleibt.

Um eine Vormontage des Filterumgehungsventils zu ermöglichen und ein Verlieren von Ventilteilen bei einer Filterwartung mit Abnehmen des Gehäusedeckels vom Filtergehäuse zu verhindern, wird weiter vorgeschlagen, dass das Filterumgehungsventil einen Ventilträger aufweist und dass in dem Ventilträger der Ventilkörper und die Feder geführt sind.

Vorzugsweise ist der Ventilsitz des Filterumgehungsventils an oder in dem Ventilträger ausgebildet, um das Ventil kompakt und die Zahl seiner Einzelteile gering zu halten.

Der Ventilträger ist bevorzugt als separates Teil gefertigt und mit dem übrigen Gehäusedeckel verbunden. Bei der Fertigung des Filters kann dann vorteilhaft eine vormontierte Einheit aus Ventilträger, Ventilkörper und Feder gebildet werden und dann als Einheit mit dem Gehäusedeckel verbunden werden.

Dabei kann der Ventilträger mit dem übrigen Gehäusedeckel verrastet oder verschweißt oder verklebt oder verschraubt sein.

Um die nötigen Strömungswege bei kompakter Ausführung des Filterumgehungsventils zur Verfügung zu stellen, wird vorgeschlagen, dass der Ventilträger an seinem Außenumfang unter Freilassung wenigstens einer von der Rohseite zum Ventilsitz führenden Strömungsöffnung mit dem Gehäusedeckel verbunden ist und dass der Ventilsitz als zu einer Längsmittelachse des Gehäusedeckels konzentrische Durchbrechung im Ventilträger ausgebildet ist.

Alternativ kann der Ventilträger mit dem übrigen Gehäusedeckel einstückig ausgeführt sein.

In weiterer diesbezüglicher Ausgestaltung ist vorgesehen, dass der Ventilträger mit wenigstens einer von der Rohseite zum Ventilsitz führenden Strömungsöffnung versehen ist und dass der Ventilsitz als zu einer Längsmittelachse des Gehäusedeckels konzentrische Durchbrechung im Ventilträger ausgebildet ist.

Um die Feder des Filterumgehungsventils günstig unterbringen und führen zu können, schlägt die Erfindung vor, dass die Feder eine Schraubendruckfeder ist und den Ventilkörper zumindest über einen Teil seiner Länge umgibt.

Eine Weiterbildung des Filters sieht vor, dass der Filtereinsatz mit unterschiedlicher axialer Länge seiner Federstütze oder mit unterschiedlicher axialer Lage seiner Federstütze herstellbar ist und dass dadurch die Vorspannung der Feder und der Öffnungsdruck des Filterumgehungsventils veränderbar sind. Für eine Änderung der Vorspannung der Feder und des Öffnungsdrucks des Filterumgehungsventils sind also nur sehr geringe Änderungen am Filtereinsatz erforderlich, wodurch keine nennenswerten Änderungskosten entstehen.

Um die Abstützung der Feder an der Federstütze zu verbessern und zuverlässig zu gewährleisten, ist vorgesehen, dass im oder am Ventilträger eine das vom Ventilkörper abgewandte Ende der Feder abdeckende, relativ zum Ventilträger begrenzt axial verschiebbare Federendkappe oder Federzwischenstütze geführt ist.

In weiterer diesbezüglicher Ausgestaltung kann der Filter mit unterschiedlicher axialer Länge der Federendkappe oder Federzwischenstütze herstellbar sein, wodurch ebenfalls die Vorspannung der Feder und der Öffnungsdruck des Filterumgehungsventils veränderbar sind. In dieser Ausführung kann eine Änderung des Öffnungsdrucks des Filterumgehungsventils also einfach durch Einbau einer geänderten, kürzeren oder längeren Federendkappe oder Federzwischenstütze erreicht werden.

Um eine weitere Integration von Funktionen zu ermöglichen, wird vorgeschlagen, dass der Ventilträger an seinem Außenumfang eine Dichtfläche für einen am Filtereinsatz deckelseitig angeordneten Radialdichtring aufweist.

Um die Federstütze räumlich und funktional günstig in den Filtereinsatz zu integrieren, ist vorgesehen, dass die am Filtereinsatz vorhandene Federstütze mit einem zentralen Stützkörper oder mit einer Stirnscheibe des Filtereinsatzes verbunden oder einstückig ist.

Viele Filter weisen eine Entleerungsöffnung auf, durch welche bei einer Wartung des Filters mit Entnehmen des Filtereinsatzes aus dem Filtergehäuse dieses zunächst entleert wird. Dabei muss dafür gesorgt werden, dass die Entleerungsöffnung im laufenden Betrieb des Filters zuverlässig geschlossen gehalten wird und dass sie bei dem Entnehmen des Filtereinsatzes geöffnet wird. Um dieser Anforderung auch mit dem erfindungsgemäßen Filter gerecht zu werden, schlägt die Erfindung vor, dass das Filtergehäuse an einem deckelfernen Gehäuseboden eine exzentrische Entleerungsöffnung aufweist, dass der Filtereinsatz an seiner im Einbauzustand dem Gehäuseboden zugewandten Seite ein Dichtelement aufweist und dass im in den Filter eingebauten Zustand des Filtereinsatzes und bei am Filtergehäuse angebrachtem Gehäusedeckel die Feder über die Federstütze den Filtereinsatz mit einer das Dichtelement in dichtender Anlage an der Entleerungsöffnung haltenden Kraft beaufschlagt.

In einer üblichen Bauform haben Filtergehäuse in ihrem Boden neben der exzentrischen Entleerungsöffnung den Auslass in einer zentralen Position, wobei dieser allgemein rohrstutzenförmig ausgeführt ist. Eine Weiterbildung des Filters sieht vor, dass der Filtereinsatz an seiner im Einbauzustand dem Gehäuseboden zugewandten Seite eine untere Stirnscheibe mit einer zentralen Öffnung aufweist, mittels welcher der Filtereinsatz auf den rohrstutzenförmig ausgebildeten, zentral angeordneten Auslass aufsteckbar ist, und dass die untere Stirnscheibe auf ihrer zum Gehäuseboden weisenden Seite über einen die Entleerungsöffnung in jeder Stellung in Umfangsrichtung überdeckenden Bereich mit einem Dichtmaterialring als Dichtelement belegt ist. Bei dieser Ausführung kann der Filtereinsatz in jeder beliebigen Verdrehstellung relativ zum Filtergehäuse die Entleerungsöffnung verschließen, was das Einbauen des Filtereinsatzes einfach hält.

Eine dazu alternative Ausgestaltung sieht vor, dass der Filtereinsatz an seiner im Einbauzustand dem Gehäuseboden zugewandten Seite eine untere Stirnscheibe mit einer zentralen Öffnung aufweist, mittels welcher der Filtereinsatz auf den rohrstutzenförmig ausgebildeten, zentral angeordneten Auslass aufsteckbar ist, dass die untere Stirnscheibe auf ihrer zum Gehäuseboden weisenden Seite eine Dichtmaterialscheibe oder einen Dichtmaterialring als Dichtelement trägt, die/der im Durchmesser an die Entleerungsöffnung angepasst ist, und dass am Filtereinsatz und am rohrstutzenförmigen Auslass Positionierführungsmittel angeordnet sind, mittels welchen der Filtereinsatz bei seinem Einbauen in den Filter in eine Verdrehstellung zwangsführbar ist, in der das Dichtelement die Entleerungsöffnung überdeckt. Hier genügt ein relativ kleines, an die Größe der Entleerungsöffnung angepasstes Dichtelement, was Dichtmaterial einspart. Für die hier nötige bestimmte relative Positionierung des Filtereinsatzes zum Filtergehäuse sorgen die Positionierführungsmittel.

Konkret können die zusammenwirkenden Positionierführungsmittel durch wenigstens eine schraubenlinienförmig verlaufende Rampe und eine daran anschließende axiale Nut am Außenumfang des rohrstutzenförmigen Auslasses einerseits und eine radial nach innen vorragende Nase in der zentralen Öffnung in der unteren Stirnscheibe andererseits gebildet sein oder es können die zusammenwirkenden Positionierführungsmittel am Filtereinsatz durch eine schraubenlinienförmig verlaufenden Rampe mit einer Stufe darin einerseits und durch eine radial nach außen vorragende Nase am Außenumfang des rohrstutzenförmigen Auslasses andererseits gebildet sein.

Die Lösung des zweiten, den mit dem Filter zusammenwirkenden Filtereinsatz betreffenden Teils der Aufgabe gelingt erfindungsgemäß mit einem Filtereinsatz, der dadurch gekennzeichnet ist, dass er eine Federstütze aufweist und dass im in den Filter eingebauten Zustand des Filtereinsatzes die Feder des Filterumgehungsventils an ihrem von dem Ventilkörper abgewandten Ende mittels der Federstütze des Filtereinsatzes abstützbar und vorspannbar ist. Der erfindungsgemäße Filtereinsatz ist auf den vorstehend beschriebenen Filter abgestimmt und für ein Zusammenwirken mit dem Filter vorgesehen, indem im oder am Filtereinsatz die Federstütze angeordnet ist, die für die nötige Vorspannung der Feder des Filterumgehungsventils des Filters sorgt, wenn der Filtereinsatz in den Filter eingebaut ist und der Gehäusedeckel am Filtergehäuse angebracht ist.

Die Federstütze kann dabei vorzugsweise durch einen einen Teil des Filtereinsatzes bildenden Stützkörper gebildet oder an einem einen Teil des Filtereinsatzes bildenden Stützkörper ausgebildet sein.

In einer dazu alternativen Ausgestaltung kann die Federstütze vorteilhaft durch eine Stirnscheibe des Filtereinsatzes gebildet oder an einer Stirnscheibe des Filtereinsatzes ausgebildet sein.

Weiter ist für den Filtereinsatz bevorzugt vorgesehen, dass er mit unterschiedlicher axialer Länge seiner Federstütze oder mit unterschiedlicher axialer Lage seiner Federstütze herstellbar ist und dass dadurch die Vorspannung der Feder und der Öffnungsdruck des Filterumgehungsventils veränderbar sind.

Um ein zuverlässiges Zusammenwirken der Federstütze mit der Feder oder Federendkappe oder Federzwischenstütze zu gewährleisten, weist zweckmäßig die Federstütze eine entsprechend der Form und Anordnung des der Federstütze zugewandten Endes der Feder oder der Federendkappe oder der Federzwischenstütze geformte und angeordnete Stützfläche auf.

Um mit dem Filtereinsatz eine im Filter vorhandene Entleerungsöffnung bedarfsgerecht öffnen und verschließen zu können, ist vorgesehen, dass der Filtereinsatz an seiner im Einbauzustand einem Gehäuseboden des Filtergehäuses zugewandten Seite ein Dichtelement aufweist und dass im in den Filter eingebauten Zustand des Filtereinsatzes und bei am Filtergehäuse angebrachtem Gehäusedeckel mittels der Feder des Filterumgehungsventils über die Federstütze der Filtereinsatz mit einer das Dichtelement in dichtender Anlage an der im Gehäuseboden angeordneten exzentrischen Entleerungsöffnung haltenden Kraft beaufschlagbar ist.

In weiterer Ausgestaltung wird vorgeschlagen, dass der Filtereinsatz an seiner im Einbauzustand dem Gehäuseboden des Filtergehäuses zugewandten Seite eine untere Stirnscheibe mit einer zentralen Öffnung aufweist, mittels welcher der Filtereinsatz auf einen rohrstutzenförmig ausgebildeten, zentral angeordneten Auslass des Filters aufsteckbar ist, und dass die untere Stirnscheibe auf ihrer im Einbauzustand zum Gehäuseboden weisenden Seite über einen die Entleerungsöffnung in jeder Stellung in Umfangsrichtung überdeckenden Bereich mit einem Dichtmaterialring als Dichtelement belegt ist.

In einer dazu alternativen Ausgestaltung ist vorgesehen, dass der Filtereinsatz an seiner im Einbauzustand dem Gehäuseboden des Filtergehäuses zugewandten Seite eine untere Stirnscheibe mit einer zentralen Öffnung aufweist, mittels welcher der Filtereinsatz auf einen rohrstutzenförmig ausgebildeten, zentral angeordneten Auslass des Filters aufsteckbar ist, dass die untere Stirnscheibe auf ihrer im Einbauzustand zum Gehäuseboden weisenden Seite eine Dichtmaterialscheibe oder einen Dichtmaterialring als Dichtelement trägt, die/der im Durchmesser an die Entleerungsöffnung angepasst ist, und dass am Filtereinsatz Positionierführungsmittel angeordnet sind, mittels welchen der Filtereinsatz bei seinem Einbauen in den Filter im Zusammenwirken mit am rohrstutzenförmigen Auslass angeordneten weiteren Positionierführungsmitteln in eine Verdrehstellung, in der das Dichtelement mit der Entleerungsöffnung deckungsgleich ist, zwangsführbar ist.

Konkret können die Positionierführungsmittel am Filtereinsatz durch eine radial nach innen vorragende Nase in der zentralen Öffnung in der unteren Stirnscheibe gebildet sein, wobei die Nase beim Einbauen des Filtereinsatzes in den Filter mit wenigstens einer schraubenlinienförmig verlaufenden Rampe und einer daran anschließenden axialen Nut am Außenumfang des rohrstutzenförmigen Auslasses positionierend zusammenwirkt, oder die Positionierführungsmittel am Filtereinsatz können durch eine schraubenlinienförmig verlaufenden Rampe mit einer Stufe darin gebildet sein, wobei die Rampe beim Einbauen des Filtereinsatzes in den Filter mit einer radial nach außen vorragenden Nase am Außenumfang des rohrstutzenförmigen Auslasses positionierend zusammenwirkt.

Im Folgenden werden Ausführungsbeispiele der Erfindung anhand einer Zeichnung erläutert. Die Figuren der Zeichnung zeigen:
- Figur 1: einen Gehäusedeckel eines Filters, mit einem darin angeordneten Filterumgehungsventil, in einer ersten Ausführung, im Längsschnitt,
- Figur 2: den Gehäusedeckel aus Figur 1 zusammen mit einem eingebauten Filtereinsatz, im Längsschnitt,
- Figur 3: einen Gehäusedeckel eines Filters, mit einem darin angeordneten Filterumgehungsventil, in einer zweiten Ausführung, im Längsschnitt,
- Figur 4: den Gehäusedeckel aus Figur 3 zusammen mit einem eingebauten Filtereinsatz, im Längsschnitt,
- Figur 5: einen Gehäusedeckel eines Filters, mit einem darin angeordneten Filterumgehungsventil, in einer dritten Ausführung, im Längsschnitt,
- Figur 6: den Gehäusedeckel aus Figur 5 zusammen mit einem eingebauten Filtereinsatz, im Längsschnitt,
- Figur 7: einen Gehäusedeckel eines Filters, mit einem darin angeordneten Filterumgehungsventil, in einer vierten Ausführung, im Längsschnitt,
- Figur 8: einen Filter mit dem Gehäusedeckel aus Figur 7 zusammen mit einem Filtereinsatz und einem Filtergehäuse während des Zusammenbauens, im Längsschnitt,
- Figur 9: den Filter aus Figur 8 im fertig zusammengebauten Zustand, im Längsschnitt,
- Figur 10: den Filtereinsatz des Filters aus Figur 8 und 9 als Einzelteil, im Längsschnitt,
- Figur 11: den Filtereinsatz aus Figur 10 in einer leicht schrägen Draufsicht,
- Figur 12: einen Filter mit einem Gehäusedeckel, einem Filtereinsatz und einem Filtergehäuse während des Zusammenbauens, in einer weiteren Ausführung, im Längsschnitt,
- Figur 13: den Filter aus Figur 12 im fertig zusammengebauten Zustand, im Längsschnitt,
- Figur 14: den Filter aus Figur 13 im Querschnitt gemäß der Linie XIII - XIII in Figur 13,
- Figur 15: den Filtereinsatz aus Figur 13 in einer leicht schrägen Unteransicht,
- Figur 16: das Filtergehäuse des Filters aus Figur 12 und 13 als Einzelteil, in Ansicht schräg von oben,
- Figur 17: ein Detail links unten aus Figur 13 mit Entleerungsöffnung und Dichtelement in vergrößerter Darstellung, im Längsschnitt,
- Figur 18 bis 22: weitere Ausführungen des Dichtelementes des Filtereinsatzes, in gleicher Detaildarstellung wie in Figur 17
- Figur 23: einen Filter mit eingebautem Filtereinsatz und angebrachtem Gehäusedeckel mit Filterumgehungsventil, in einer geänderten Ausführung, im Längsschnitt,
- Figur 24: den Gehäusedeckel und einen oberen Teil des Filtergehäuses des Filters aus Figur 1 vor dem Anbringen des Gehäusedeckels, im Längsschnitt,
- Figur 25: den Filter aus Figur 23 während des Anbringens des Gehäusedeckels, im Längsschnitt,
- Figur 26: den Gehäusedeckel und einen oberen Teil des Filtergehäuses des Filters aus Figur 1 im miteinander verbundenen Zustand und mit geöffnetem Filterumgehungsventil, im Längsschnitt,
- Figur 27: den Gehäusedeckel aus den Figuren 23 bis 26 in einer Ansicht schräg von unten,
- Figur 28: den Filtereinsatz des Filters aus Figur 23, in Ansicht schräg von oben,
- Figur 29: einen Stützkörper des Filtereinsatzes aus Figur 28 als Einzelteil in Ansicht schräg von oben,
- Figur 30: den Filtereinsatz aus Figur 23 in Ansicht schräg von unten,
- Figur 31: den Filtereinsatz aus Figur 23 in einer Seitenansicht,
- Figur 32: einen unteren Teil des Filtergehäuses in einer geschnittenen Ansicht schräg von oben,
- Figur 33: das in Figur 23 eingekreiste Detail des Filters in vergrößerter Darstellung, und
- Figur 34: den Filter in einem Querschnitt gemäß der Schnittlinie A-A in Figur 23.

In der folgenden Figurenbeschreibung sind gleiche Teile in den verschiedenen Figuren stets mit den gleichen Bezugsziffern bezeichnet, sodass nicht zu jeder Figur alle Bezugsziffern neu erläutert werden müssen.

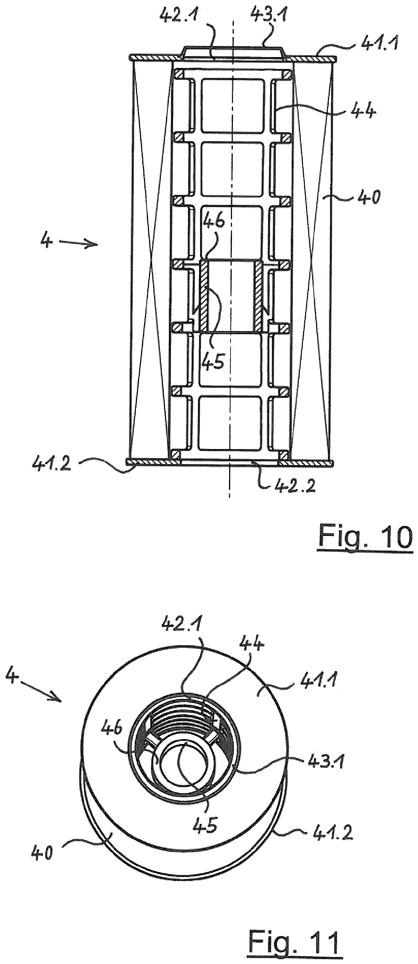

Die wesentlichen Bestandteile der Radialdichtung 43.1 des Filtereinsatzes sind in den Figuren 10 und 11 abgebildet, die weiteren Figuren dienen der allgemeinen Erläuterung eines Filters beziehungsweise eines Filtereinsatzes. Insbesondere sind Kombinationen von Merkmalen, die nicht in den Schutzbereich der unabhängigen Ansprüche fallen, nicht Teil der vorliegenden Erfindung. Auch Wege zur Ausführung der Erfindung unter Verwendung von Merkmalen, die als Alternativen dargestellt sind, sind nicht von den Ansprüchen umfasst.

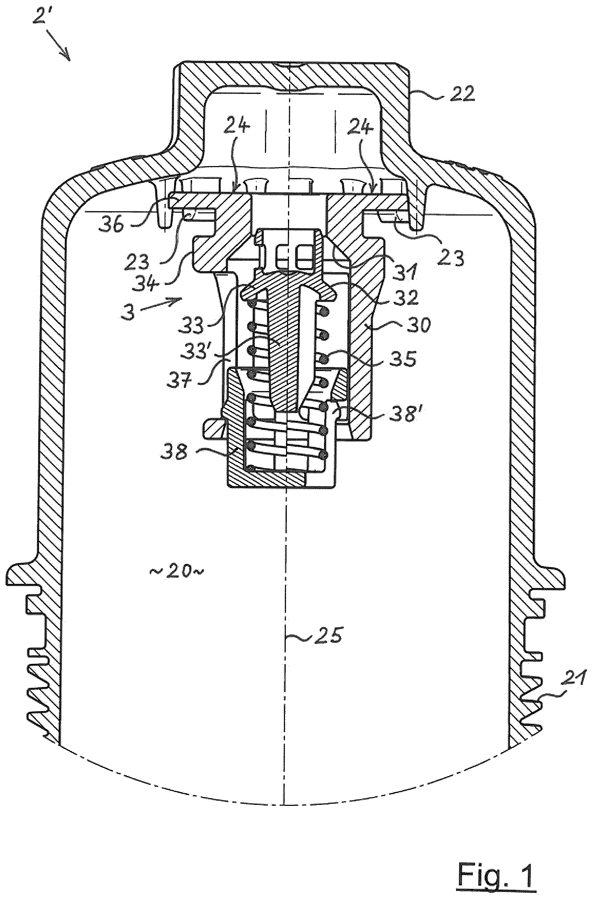

Figur 1 der Zeichnung zeigt einen Gehäusedeckel 2' eines Filters, mit einem darin angeordneten Filterumgehungsventil 3, in einer ersten Ausführung, im Längsschnitt. Der Gehäusedeckel 2' ist glockenförmig mit einem als Außengewinde ausgeführten Schraubgewinde 21 an seinem unteren Randbereich und mit einem zentral an seiner Oberseite angeordneten Werkzeugansatzes 22 für ein Schraubwerkzeug zum Festdrehen und Losdrehen des Gehäusedeckels 2' an bzw. von einem hier nicht dargestellten Filtergehäuse. Im Inneren 20 des Gehäusedeckels 2' ist deckelfest ein Filterumgehungsventil 3 angeordnet, welches im Betrieb des zugehörigen Filters eine Umgehungsströmung an einem Filtereinsatz des Filters vorbei erlaubt, wenn der Strömungswiderstand durch den Filtereinsatz ein vorgebbares Maß überschreitet.

Das Filterumgehungsventil 3 besitzt als wesentliche Bestandteile einen Ventilträger 30, in dessen oberem Bereich ein Ventilsitz 31 ausgebildet ist, einen Ventilkörper 32, der im Ventilträger 30 axial verschiebbar geführt ist, eine Feder 35, die den Ventilkörper 32 vorbelastet und über einen Teil seiner Länge umgibt, und eine Federendkappe 38, die das von dem Ventilkörper 32 abgewandte Ende der Feder 35 überdeckt und die am Ventilträger 30 in Axialrichtung begrenzt verschiebbar geführt ist. Der Ventilkörper 32 ist pilzförmig ausgeführt mit einem kalottenförmigen Kopf 33 und einem darunter verlaufenden schlankeren Schaft 33'. Die Federendkappe 38 ist mittels an ihr angeformter Rastarme 38' mit dem Ventilträger 30 verrastet, wobei die Rastarme 38' zugleich die Begrenzung des Verschiebungsweges der Federendkappe 38 relativ zum Ventilträger 30 bilden.

Radial außen besitzt der Ventilträger 30 in seinem oberen Bereich eine zylindrische Dichtfläche 34, die zum dichtenden Zusammenwirken mit einem hier noch nicht eingebauten Filtereinsatz dient.

Das obere Stirnende des Ventilträgers 30 wird durch einen umlaufenden Haltekragen 36 gebildet, welcher mittels Halteelementen 23 an der Innenseite des Gehäusedeckels 2' mit diesem verbunden, hier verrastet, ist. Durch den Haltekragen 36 verlaufen im Schnitt gemäß Figur 1 nicht sichtbare Strömungsöffnungen 24, welche bei eingebautem Filtereinsatz eine Rohseite des Filters mit einer Anströmseite des Filterumgehungsventils 3 verbinden.

In dem in Figur 1 gezeigten Zustand des Filterumgehungsventils 3 ist dessen Feder 35 mit der Federendkappe 38 mangels eines Filtereinsatzes unbelastet und nicht vorgespannt, wodurch der Ventilkörper 33 hier seine Öffnungsstellung relativ zum Ventilsitz 31 einnimmt.

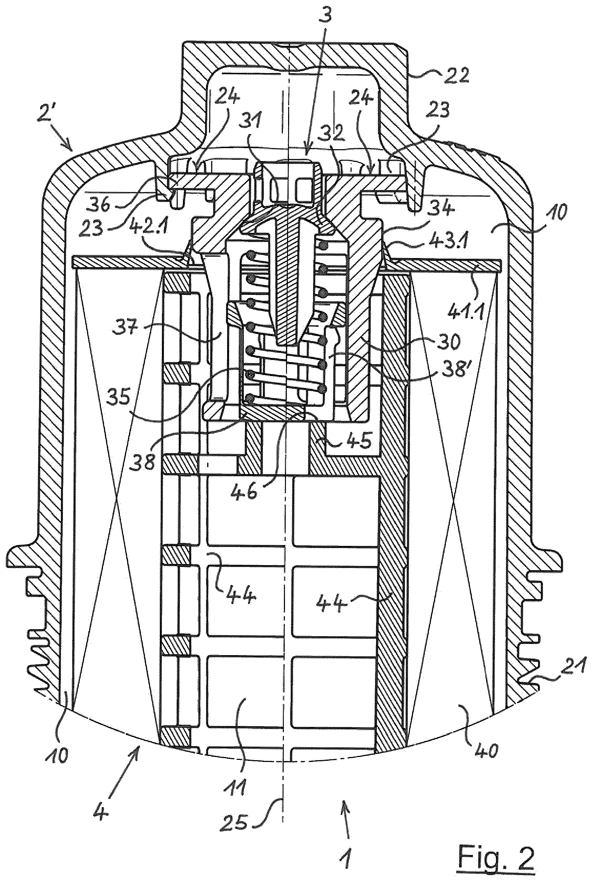

Figur 2 zeigt den Gehäusedeckel 2' aus Figur 1 zusammen mit einem eingebauten Filtereinsatz 4 im Längsschnitt, wobei ein Filtergehäuse, mit dem der Gehäusedeckel 2' verschraubt ist, hier aus Gründen der Übersichtlichkeit nicht dargestellt ist. Der Filtereinsatz 4 besitzt einen hohlzylindrischen Filterstoffkörper 40, der oberseitig von einer oberen Stirnscheibe 41.1 eingefasst ist. Mittels einer weiteren Stirnscheibe ist die untere, hier nicht sichtbare Stirnseite des Filterstoffkörpers 40 abgedeckt. Im Inneren des Filterstoffkörpers 40 ist ein gitterförmiger Stützkörper 44 angeordnet, an welchen sich der Filterstoffkörper 40 mit seiner radial inneren Umfangsseite bei der Durchströmung mit einer zu filternden Flüssigkeit abstützen kann, um ein Kollabieren des Filterstoffkörpers 40 zu vermeiden.

Außen vom Filtereinsatz 4 liegt eine Rohseite 10 des Filters 1, auf welche im Filterbetrieb über einen nicht sichtbaren Einlass eine zu reinigende Flüssigkeit, alternativ ein zu reinigendes gasförmiges Medium, einströmt. Radial innen vom Filterstoffkörper 40 liegt eine Reinseite 11 des Filters 1, von wo aus durch einen hier ebenfalls nicht sichtbaren Auslass die gefilterte Flüssigkeit abströmt.

Die obere Stirnscheibe 41.1 des Filtereinsatzes 4 besitzt eine zentrale Öffnung 42.1, die von einer Radialdichtung 43.1 umgeben ist. Mit der Öffnung 42.1 und der Dichtung 43.1 ist der Filtereinsatz 4 auf die zylindrische Dichtfläche 34 außen am Ventilträger 30 des deckelfesten Filterumgehungsventils 3 aufgesteckt.

Der in Inneren des Filtereinsatzes 4 angeordnete Stützkörper 44 ist einstückig mit einer Federstütze 45 ausgebildet, die eine nach oben weisende Stützfläche 46 aufweist. In dem in Figur 2 gezeigten zusammengebautem Zustand liegt die Federstütze 45 mit ihrer Stützfläche 46 in Anlage an der Unterseite der Federendkappe 38 und spannt über diese die Feder 35 des Filterumgehungsventils 3 mit einer vorgebbaren Kraft vor, wodurch ein gewünschter Öffnungsdruck des Filterumgehungsventils 3 festgelegt wird.

Wenn ein anderer Öffnungsdruck des Filterumgehungsventils 3 gewünscht wird, kann dies einfach durch eine Veränderung der axialen Länge und/oder axialen Lage der Federstütze 45 bewirkt werden, da hierdurch eine entsprechende Vergrößerung oder Verkleinerung der Vorspannung der Feder 35 verursacht wird. Weitere Änderungen am Filter 1 müssen zu diesem Zweck nicht vorgenommen werden.

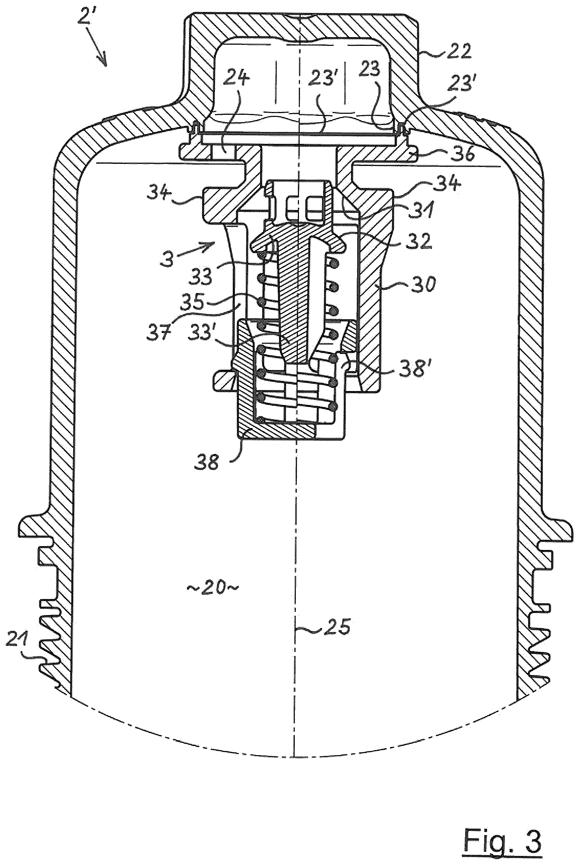

Figur 3 zeigt einen Gehäusedeckel 2' eines Filters, mit einem darin angeordneten Filterumgehungsventil 3, in einer zweiten Ausführung, im Längsschnitt. Das Filterumgehungsventil 3 an sich ist identisch mit dem Filterumgehungsventil 3 gemäß dem Beispiel in den Figuren 1 und 2 aufgebaut. Unterschiedlich ist die Anbindung des Filterumgehungsventils 3 an den dieses tragenden Gehäusedeckel 2'. Der Ventilträger 30 besitzt bei dem Beispiel nach Figur 3 wieder einen oberseitigen, umlaufenden Haltekragen 36, der hier mittels einer Schweißverbindung 23' mit entsprechend geformten Halteelementen 23 des Gehäusedeckels 2' verbunden ist. Um ein Zuströmen von ungefilterter Flüssigkeit von der Rohseite des Filters zur Anströmseite des Filterumgehungsventils 3 zu ermöglichen, ist in dem Haltekragen 36 mindestens eine Strömungsöffnung 24 angebracht.

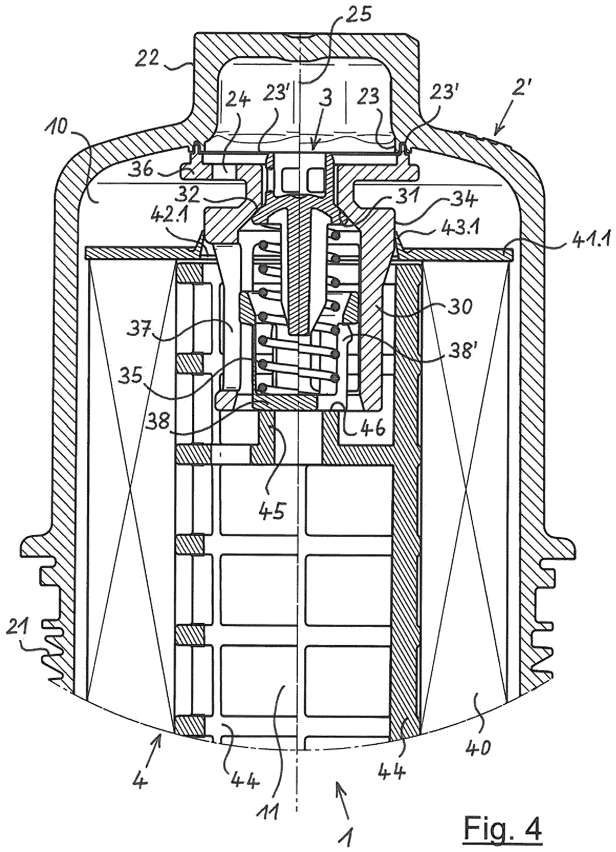

Figur 4 zeigt den Gehäusedeckel 2' aus Figur 3 zusammen mit einem eingebauten Filtereinsatz 4, im Längsschnitt, wobei auch hier wieder, wie in Figur 2, ein zugehöriges Filtergehäuse, mit dem der Gehäusedeckel 2' mittels des Schraubgewindes 21 verschraubt ist, aus Gründen der Übersichtlichkeit nicht dargestellt ist.

Der Filtereinsatz 4 in Figur 4 ist mit dem Filtereinsatz 4 in Figur 2 identisch und besitzt ebenfalls die mit dem Stützkörper 44 einstückige Federstütze 45 mit ihrer Stützfläche 46. In dem in Figur 4 gezeigten zusammengebautem Zustand stützt die Federstütze 45 über die Federendkappe 38 die Feder 35 des Filterumgehungsventils 3 vor, wodurch der Ventilkörper 32 mit einer vorgegebenen Kraft vorbelastet an seinem Ventilsitz 31 anliegt. Wenn die Druckdifferenz zwischen der Rohseite 10 und der Reinseite 11 einen vorgebbaren Grenzwert überschreitet, wird der Ventilkörper 32 von der durch die Strömungsöffnung 24 zur Anströmseite des Filterumgehungsventils 3 gelangenden Flüssigkeit gegen die Kraft der Feder 35 nach unten und damit in Öffnungsstellung bewegt, wodurch eine unmittelbare Strömungsverbindung von der Rohseite 10 zur Reinseite 11 unter Umgehung des Filterstoffkörpers 40 freigegeben wird.

Auch bei dem Filter 1 gemäß Figur 4 kann einfach durch Veränderung der axialen Länge und/oder der axialen Lage der Federstütze 45 im Filtereinsatz 4 der Öffnungsdruck des Filterumgehungsventils 3 verändert und auf einen gewünschten Wert festgelegt werden.

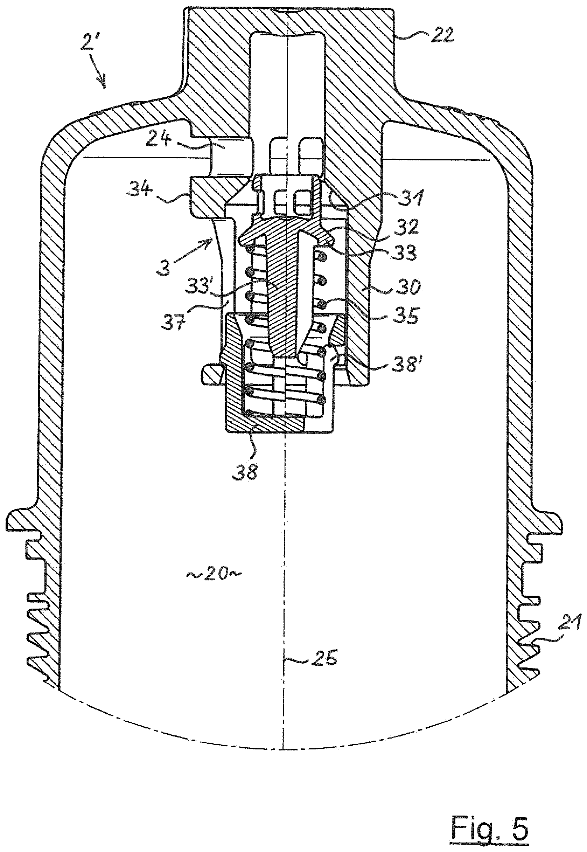

Figur 5 zeigt einen Gehäusedeckel 2' eines Filters, mit einem darin angeordneten Filterumgehungsventil 3, in einer dritten Ausführung, im Längsschnitt. Charakteristisch für dieses Ausführungsbeispiel ist, dass hier der Ventilträger 30 einstückig mit dem Gehäusedeckel 2' ausgeführt ist. Im Ventilträger 30 ist wieder der Ventilsitz 31 ausgebildet, der mit dem Ventilkörper 32 zusammenwirkt, welcher axial verschieblich im Ventilträger 30 geführt ist. Auch hier hat der Ventilkörper 32 einen kalottenförmigen Kopf 33 und darunter einen schlanken Schaft 33'. Um den Schaft 33' herum ist die Feder 35 angeordnet. Der untere Teil der Feder 35 ist von der Federendkappe 38 überdeckt, welche mittels ihrer in Längsschlitzen 37 geführten Rastarme 38' begrenzt in Axialrichtung verschiebbar mit dem Ventilträger 30 verbunden ist. Über mehrere Strömungsöffnungen 24, die radial durch einen oberen Endbereich des Ventilträgers 30 verlaufen, ist die Rohseite 10 des Filters 1 mit der Anströmseite des Filterumgehungsventils 3 verbunden.

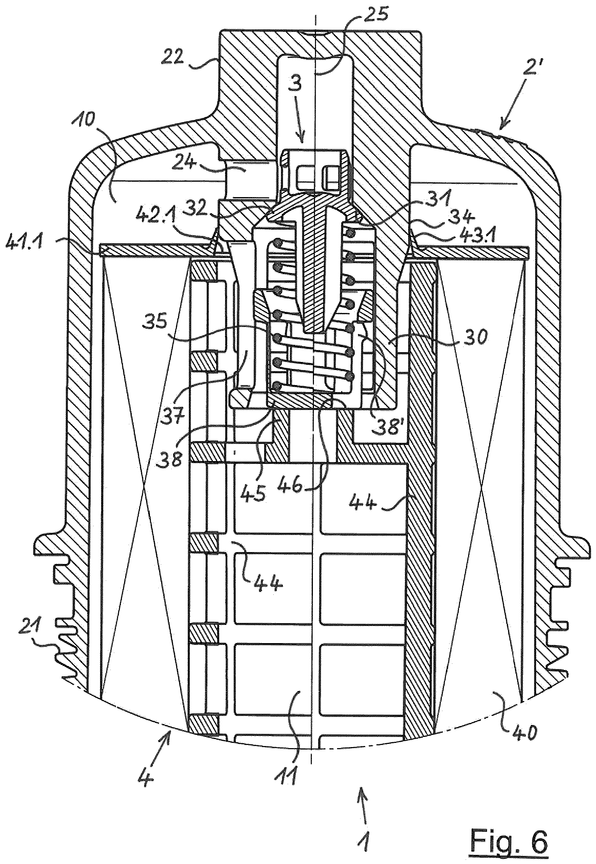

Figur 6 zeigt den Gehäusedeckel 2' aus Figur 5 zusammen mit einem eingebauten Filtereinsatz 4, im Längsschnitt, wobei hier wieder, wie in den Figuren 2 und 4, ein zugehöriges Filtergehäuse, mit dem der Gehäusedeckel 2' mittels des Schraubgewindes 21 verschraubt ist, aus Gründen der Übersichtlichkeit nicht dargestellt ist.

Der Filtereinsatz 4 in Figur 6 ist mit dem Filtereinsatz 4 in den Figuren 2 und 4 identisch und besitzt ebenfalls die mit dem Stützkörper 44 einstückige Federstütze 45 mit ihrer Stützfläche 46. Hinsichtlich des Zusammenwirkens des Filtereinsatzes 4 mit dem Filterumgehungsventil 3 in der Ausführung gemäß Figur 6 wird daher auf die vorhergehende Beschreibung, insbesondere der Figuren 2 und 4, verwiesen.

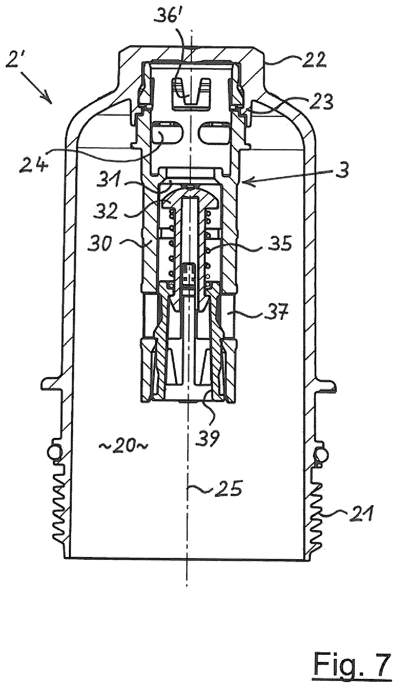

Figur 7 zeigt einen Gehäusedeckel 2' eines Filters, mit einem darin angeordneten Filterumgehungsventil 3, in einer vierten Ausführung, im Längsschnitt. Auch hier ist das Filterumgehungsventil 3 konzentrisch zur Längsmittelachse 25 des Gehäusedeckels 2' in dessen Innerem 20 angeordnet und mit dem Deckel 2' verbunden, hier mittels ganz oben am Ventilträger 30 angeordneter Rastelemente 36', die mit passend geformten Halteelementen 23 an der Innenseite des Gehäusedeckels 2' zusammenwirken. Unterhalb der Rastelemente 36' sind im Ventilträger 30 mehrere Strömungsöffnungen 24 angebracht. Darunter liegt im Ventilträger 30 der axial nach unten weisende Ventilsitz 31, unter welchen wiederum der axial beweglich geführte Ventilkörper 32 angeordnet ist. Um den Ventilkörper 33 herum ist die Feder 35 als Schraubendruckfeder angeordnet, deren unteres Ende an einer Federzwischenstütze 39 anliegt. Die Federzwischenstütze 39 ist in Axialrichtung begrenzt verschiebbar in Längsschlitzen 37 des Ventilträgers 30 geführt.

Da im Zustand gemäß Figur 7 noch kein Filtereinsatz eingebaut ist, ist die Feder 35 entspannt und liegt der Ventilkörper 32 in seiner Öffnungsstellung in einem axialen Abstand von seinem Ventilsitz 31.

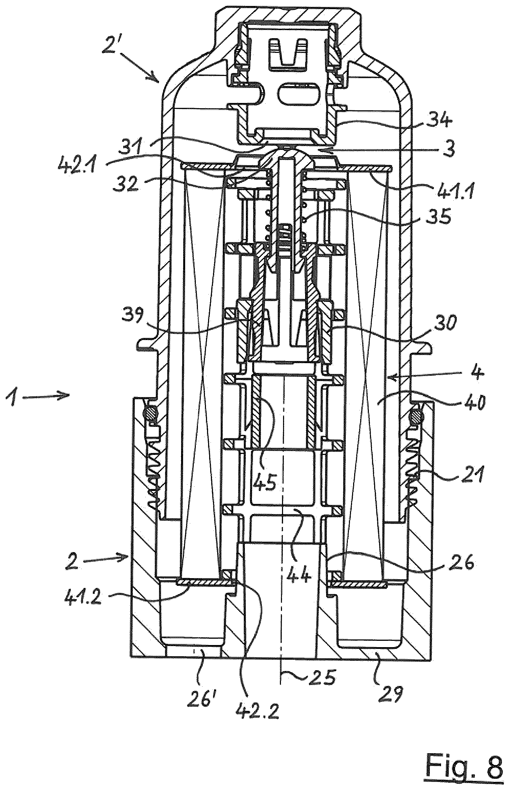

Figur 8 zeigt einen Filter 1 mit dem Gehäusedeckel 2' aus Figur 7 zusammen mit einem Filtereinsatz 4 und einem Filtergehäuse 2 während des Zusammenbauens, im Längsschnitt, wobei hier der Gehäusedeckel 2' mittels des Schraubgewindes 21 erst teilweise mit dem Filtergehäuse 2 verschraubt ist. Der Filtereinsatz 4 ist mit der in seiner unteren Stirnscheibe 41.2 vorgesehenen zentralen Öffnung 42.2 auf einen rohrstutzenförmigen Auslass 26 des Filtergehäuses 2 aufgesteckt. Das Filterumgehungsventil 3, welches einen Bestandteil des Gehäusedeckels 2' bildet, ist von oben her auf den Filtereinsatz 4 und das Filtergehäuse 2 aufgesetzt, wobei das Filterumgehungsventil 3 mit dem Ventilträger 30 durch die zentrale Öffnung 42.1 in der oberen Stirnscheibe 41.1 in das Innere des Filtereinsatzes 4 eintaucht. In dem in Figur 8 gezeigten, unvollständigen Montagezustand liegt die Federzwischenstütze 39 noch in einem geringen axialen Abstand von der am Stützkörper 44 des Filtereinsatzes 4 vorgesehenen Federstütze 45. Dadurch ist die Feder 35 des Filterumgehungsventils 3 noch nicht vorgespannt und der Ventilkörper 32 hat noch Abstand von seinem Ventilsitz 31.

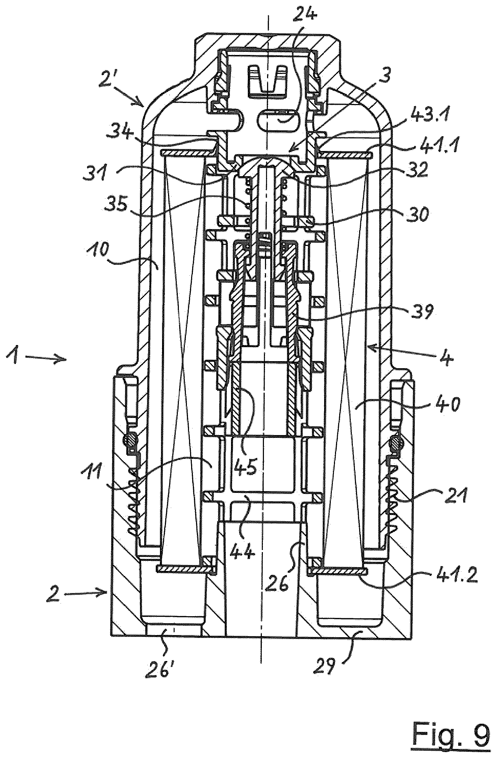

Figur 9 zeigt den Filter aus Figur 8 im fertig zusammengebauten Zustand, im Längsschnitt. Der Filtereinsatz 4 sitzt nun mit seiner unteren Stirnscheibe 41.2 auf einem Anschlag am Fuß des rohrstutzenförmigen Auslasses 26, so dass er sich innerhalb des Filtergehäuses 2 nicht mehr weiter nach unten hin bewegen kann. Die Federstütze 45 steht nun in Anlage an der Unterseite der Federzwischenstütze 39 und hat diese im Vergleich zum Zustand nach Figur 8 um einen gewissen Weg nach oben hin verschoben, wodurch entsprechend die Feder 35 nun vorgespannt ist und den Ventilkörper 32 mit einer vorgegebenen Kraft gegen den Ventilsitz 31 drückt.

Im normalen Betrieb des Filters 1 strömt eine zu filternde Flüssigkeit durch einen im Boden 29 des Filtergehäuses 2 vorgesehenen Einlass 26' auf die Rohseite 10 des Filters 1 und von dort durch den Filterstoffkörper 40 des Filtereinsatzes 4 hindurch zur Reinseite 11 des Filters 1. Von dort strömt die gefilterte Flüssigkeit durch den Auslass 26 ab. Wenn der Filterstoffkörper 40 nach längerer Betriebszeit zunehmend verstopft, erhöht sich ein Differenzdruck zwischen der Rohseite 10 und Reinseite 11, bis schließlich die Druckdifferenz so groß wird, dass durch diese der Ventilkörper 32 des Filterumgehungsventils 3 gegen die Kraft der Feder 35 vom Ventilsitz 31 weg bewegt wird und so das Filterumgehungsventil 3 öffnet. In diesem Zustand ist dann ein Strömungsweg von der Rohseite 10 über die Strömungsöffnungen 24 und durch das nun offene Filterumgehungsventil 3 zur Reinseite 11 frei, so dass Flüssigkeit unter Umgehung des Filterstoffkörpers 40 durch den Filter 1 strömen kann.

Figur 10 zeigt den Filtereinsatz 4 des Filters 1 aus Figur 8 und 9 als Einzelteil, im Längsschnitt. Links und rechts in Figur 10 ist der hohlzylindrische Filterstoffkörper 40 erkennbar, der beispielsweise aus einem zickzackförmig gefalteten Filterpapier besteht. Oberseitig ist der Filterstoffkörper 40 von der oberen Stirnscheibe 41.1 abgedeckt, die mit der zentralen Öffnung 42.1 und der diese umgebenden Radialdichtung 43.1 versehen ist. Unterseitig deckt den Filterstoffkörper 40 die untere Stirnscheibe 41.2 ab, die mit der zentralen Öffnung 42.2 versehen ist. Im Inneren des Filterstoffkörpers 40 ist der gitterförmige Stützkörper 44 angeordnet, mit welchem die Federstütze 45 mit ihrer nach oben weisenden Stützfläche 46 einstückig ausgebildet ist.

Figur 11 zeigt den Filtereinsatz 4 aus Figur 10 in einer leicht schrägen Draufsicht, wobei der Blick des Betrachters auf die obere Stirnscheibe 41.1 mit ihrer zentralen Öffnung 42.1 und der diese umgebenden Dichtung 43.1 fällt. Im Inneren des Filtereinsatzes 4 ist der Stützkörper 44 mit der damit einstückig ausgebildeten Federstütze 45 und deren nach oben weisender Stützfläche 46 erkennbar. Unten in Figur 11 liegt die untere Stirnscheibe 41.2, die den Filterstoffkörper 40 unterseitig abgedeckt.

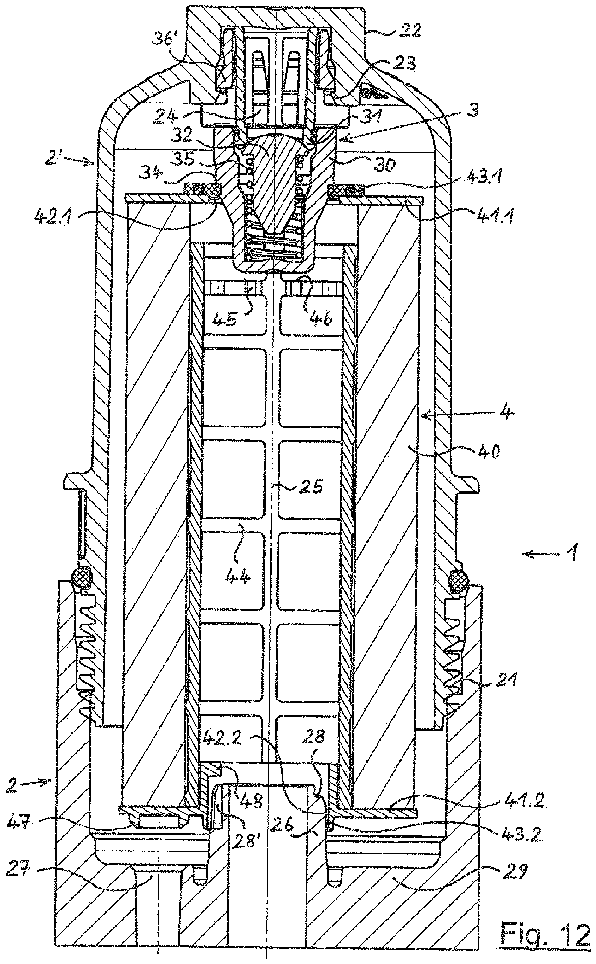

Figur 12 zeigt einen Filter 1 mit einem Gehäusedeckel 2' mit Filterumgehungsventil 3, einem Filtereinsatz 4 und einem Filtergehäuse 2 während des Zusammenbauens, in einer weiteren Ausführung, im Längsschnitt. Das Filterumgehungsventil 3 ist hier wieder ein Teil des Gehäusedeckels 2' und mit diesem über ventilseitige Rastelemente 36' und deckelseitige Halteelemente 23 verbunden.

Das Filtergehäuse 2 besitzt hier, anders als bei den zuvor beschriebenen Ausführungsbeispielen, eine exzentrische Entleerungsöffnung 27 in seinem Boden 29, die dazu dient, bei einer Wartung des Filters 1 mit einem Entnehmen des Filtereinsatzes 4 den Filter 1 zunächst zu entleeren. Im laufenden Betrieb des Filters 1 muss dagegen für einen dichten Verschluss der Entleerungsöffnung 27 gesorgt werden. Zum Verschließen der Entleerungsöffnung 27 dient ein Dichtelement 47, welches hier an der Unterseite der unteren Stirnscheibe 41.2 des Filtereinsatzes 4 angeformt ist. Damit beim Einbauen des Filtereinsatzes 4 in das Filtergehäuse 2 das Dichtelement 47 in Deckung mit der zu verschließenden Entleerungsöffnung 27 gelangt, sind hier Positionierführungsmittel am Filtereinsatz 4 und an dem auch hier rohrstutzenförmig ausgebildeten Auslass 26 vorgesehen. Auf der Seite des Filtereinsatzes 4 ist das Positionierführungsmittel eine mit der unteren Stirnscheibe 41.2 einstückig ausgebildeten, radial nach innen hin vorragende Nase 48. Auf der Seite des rohrstutzenförmigen Auslasses 26 ist das Positioniermittel eine am Außenumfang des Auslasses 26 verlaufende, schraubenlinienförmige Rampe 28, die in eine links in Figur 12 außen am rohrstutzenförmigen Auslass 26 erkennbare axiale Nut 28' mündet. Wenn der Filtereinsatz 4 von oben her in irgend einer beliebigen Verdrehstellung relativ zum Filtergehäuse 2 auf den Auslass 26 aufgesetzt wird, gelangt die Nase 48 auf die schraubenlinienförmig verlaufende Rampe 28 und kann dann auf dieser unter Drehung des Filtereinsatzes 4 schräg nach unten hin abgleiten, bis die Nase 48 in die Nut 28' eintritt. In dieser Stellung des Filtereinsatzes 4 relativ zum Filtergehäuse 2 ist das Dichtelement 47 an der unteren Stirnscheibe 41.2 deckungsgleich mit der Entleerungsöffnung 27 positioniert, so dass nun durch weiteres Verschieben des Filtereinsatzes 4 in Axialrichtung nach unten hin die Entleerungsöffnung 27 abgedichtet werden kann.

Gleichzeitig wird bei diesem Montagevorgang mittels der auch hier einen einstückigen Bestandteil des Stützkörpers 44 bildenden Federstütze 45 mit deren Stützfläche 46 die Feder 35 an ihrem unteren, vom Ventilkörper 32 abgewandten Ende abgestützt und so vorgespannt.

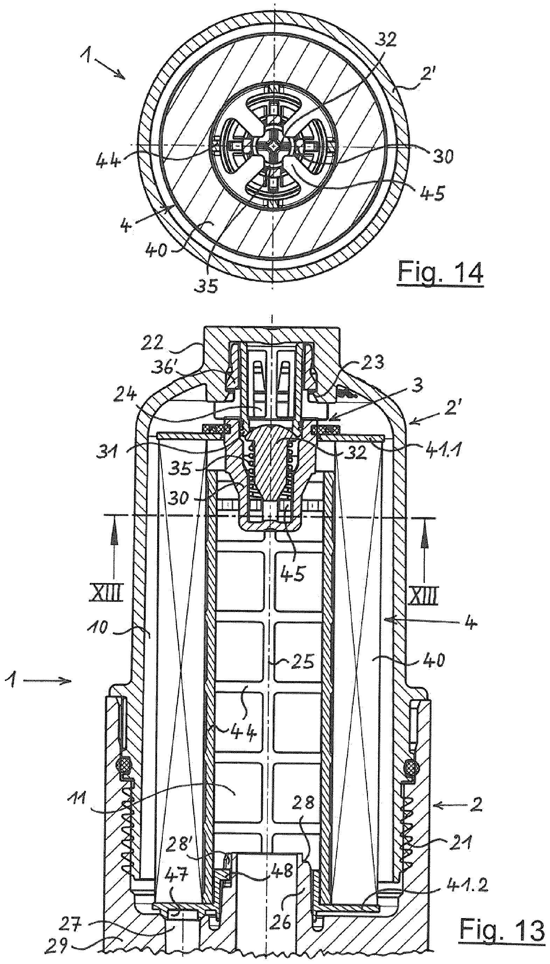

Die Figur 13 zeigt den Filter 1 aus Figur 12 im fertig zusammengebauten Zustand, ebenfalls im Längsschnitt. Der Filtereinsatz 4 befindet sich nun in seiner unteren Endstellung, in der er mit seinem Dichtelement 47 die Entleerungsöffnung 27 dicht verschließt. Zugleich liegt die Federstütze 45 an der Feder 35 an und spannt diese vor, wodurch der Ventilkörper 32 mit einer vorgegebenen Kraft an den Ventilsitz 31 gedrückt wird.

Die Feder 35 sorgt dabei gleichzeitig dafür, dass der Filtereinsatz 4 mit einer nach unten hin gerichteten Kraft beaufschlag wird, die für eine sicher dichtende Anlage des Dichtelements 47 an der Entleerungsöffnung 27 sorgt.

Figur 14 zeigt den Filter aus Figur 13 im Querschnitt gemäß der Linie XIII - XIII in Figur 13. Radial außen ist der Gehäusedeckel 2' geschnitten. Radial innen davon liegt der Filterstoffkörper 40 des Filtereinsatzes 4. Im Zentrum der Figur 14 ist die Federstütze 45 sichtbar, die Teil des Stützkörpers 44 ist und die die Feder 35 an ihrem hier dem Betrachter zugewandten unteren Ende abstützt. Innerhalb der Feder 35 ist noch die Unterseite des Ventilkörpers 32 erkennbar.

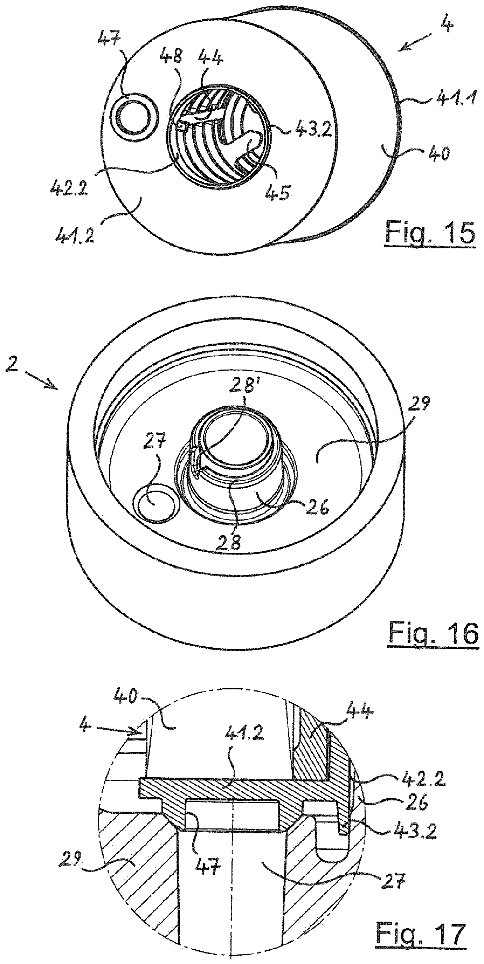

Figur 15 zeigt den Filtereinsatz 4 aus Figur 13 in einer leicht schrägen Unteransicht, wobei der Blick des Betrachters auf die Unterseite der unteren Stirnscheibe 41.2 fällt. Im Zentrum der Stirnscheibe 41.2 liegt die Öffnung 42.2, durch die hindurch ein Teil des Stützkörpers 44 mit der Federstütze 45 sichtbar ist. Links von der Öffnung 42.2 liegt an der Unterseite der Stirnscheibe 41.2 das Dichtelement 47. Rechts in Figur 15 ist der Filterstoffkörper 40 von außen sichtbar, dessen vom Betrachter abgewandte obere Stirnseite durch die obere Stirnscheibe 41.1 abgedeckt ist.

Figur 16 zeigt das Filtergehäuse 2 des Filters 1 aus Figur 12 und 13 als Einzelteil, in Ansicht schräg von oben, wobei der Blick des Betrachters auf den Boden 29 fällt. In dessen Zentrum liegt der zentrale rohrstutzenförmige Auslass 26 mit der schraubenlinienförmige Rampe 28 und der axialen Nut 28' auf seinem Außenumfang. Links von dem Auslass 26 ist die exzentrische Entleerungsöffnung 27 sichtbar.

Figur 17 zeigt ein Detail links unten aus der Figur 13 mit der Entleerungsöffnung 27 und dem Dichtelement 47 in vergrößerter Darstellung, im Längsschnitt. Im unteren Teil der Figur 17 ist ein kleiner Teil des Bodens 29 des Filtergehäuses 2 sichtbar. Darüber ist ein Teil der unteren Stirnscheibe 41.2 und des davon unterseitig eingefassten Filterstoffkörpers 40 und des darin angeordneten Stützkörpers 44 des Filtereinsatzes 4 sichtbar. Ganz rechts in Figur 17 ist noch ein kleiner Teil des Auslasses 26 sichtbar, auf den der Filtereinsatz 4 mit seiner zentralen Öffnung 42.2 unter Abdichtung durch die Radialdichtung 43.2 aufgesteckt ist. Das Dichtelement 47 liegt hier deckungsgleich und dichtend auf der Entleerungsöffnung 27 und verschließt diese.

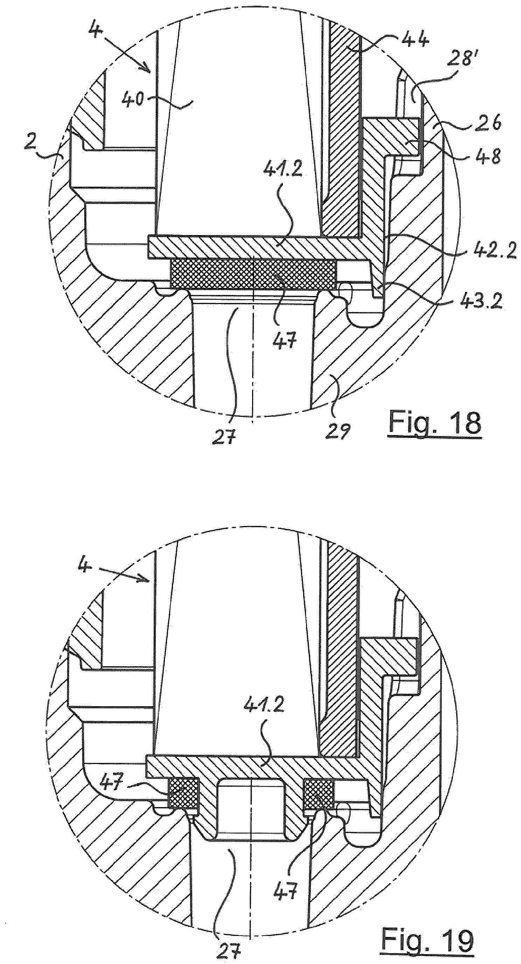

Die Figuren 18 bis 22 zeigen weitere Ausführungen des Dichtelementes 47 des Filtereinsatzes 4 und der Entleerungsöffnung 27 in gleicher Detaildarstellung wie in der Figur 17. Dabei befindet sich das Dichtelement 47 jeweils in seiner Schließstellung bezüglich der Entleerungsöffnung 27.

Figur 18 zeigt ein Beispiel, bei dem das Dichtelement 47 als Scheibe aus einem elastischen Dichtmaterial, wie Elastomer, an der Unterseite der unteren Stirnscheibe 41.2 des Filtereinsatzes 4 angebracht ist, wie angeklebt oder angeschweißt.

Bei dem Beispiel in Figur 19 ist das Dichtelement 47 als Dichtring aus Dichtmaterial ausgeführt und an seinem radial inneren Umfang an einer Haltekontur, die an der Unterseite der Stirnscheibe 41.2 angeformt ist, gehalten.

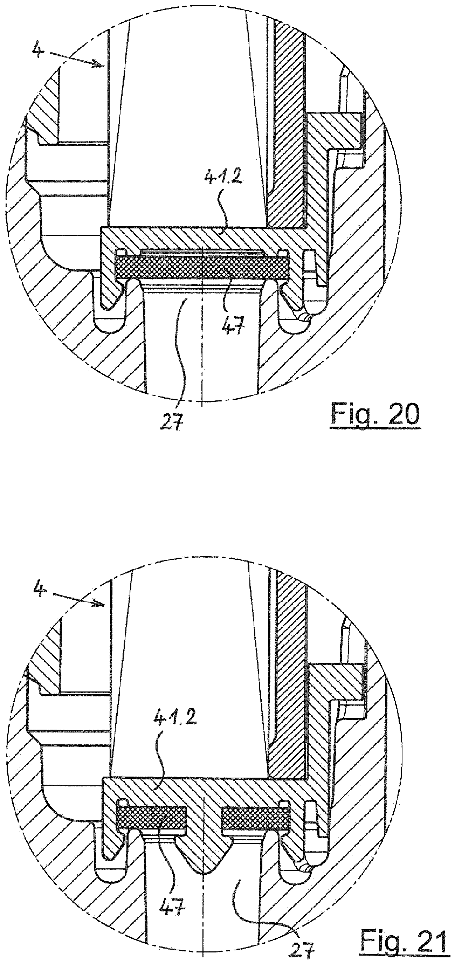

Bei dem Beispiel in Figur 20 ist das Dichtelement 47 als Dichtscheibe aus Dichtmaterial ausgeführt und an seinem radial äußeren Umfang an einer Haltekontur, die an der Unterseite der Stirnscheibe 41.2 angeformt ist, gehalten.

Bei dem Beispiel in Figur 21 ist das Dichtelement 47 in Kreisringform mit einer zentralen Durchbrechung ausgeführt, mittels der das Dichtelement 47 auf einen Haltedorn oder -pilz aufgesteckt ist, der an der Unterseite der Stirnscheibe 41.2 angeformt ist. Zusätzlich ist das Dichtelement 47 hier an seinem Außenumfang wie bei dem Beispiel nach Figur 20 gehalten.

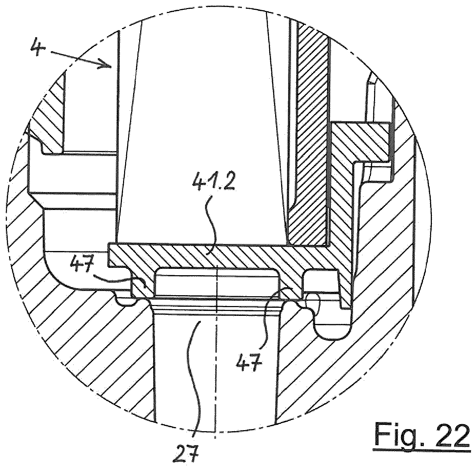

Bei dem Beispiel in Figur 22 ist das Dichtelement 47 in Ringform einstückig mit der unteren Stirnscheibe 41.2 des Filtereinsatzes 4 und dazu passend die Entleerungsöffnung 27 mit einem erhabenen umlaufenden Rand ausgeführt. Dabei besteht zweckmäßig die gesamte untere Stirnscheibe 41.2 des Filtereinsatzes 4 aus einem Material, das ausreichende Dichteigenschaften aufweist, wie thermoplastischer Elastomer.

Alternativ kann auch der Randbereich der Entleerungsöffnung 27, der mit dem Dichtelement 47 zusammenwirkt, aus einem Dichteigenschaften aufweisenden Material bestehen oder mit einem solchen Material belegt sein, um eine gute Dichtigkeit zu gewährleisten.

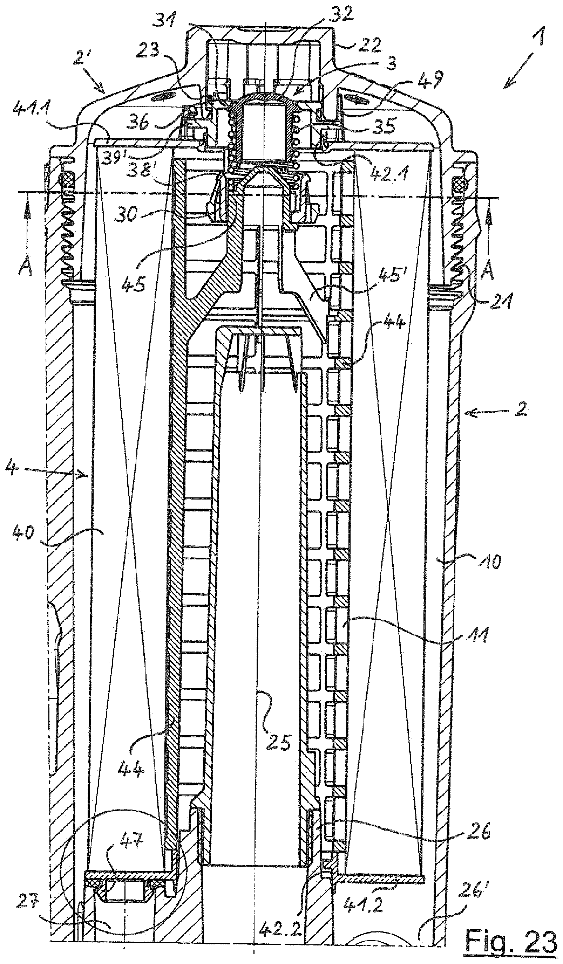

Figur 23 zeigt einen Filter 1 mit einem eingebauten Filtereinsatz 4 und mit einem am Filtergehäuse 2 angebrachten, hier mittels des Schraubgewindes 21 angeschraubten, Gehäusedeckel 2' mit Filterumgehungsventil 3, in einer geänderten Ausführung, im Längsschnitt.

Der im Filter 1 angeordnete Filtereinsatz 4 mit seinem Filterstoffkörper 40 und den beiden diesen stirnseitig einfassenden Stirnscheiben 41.1, 41.2 ist mit seiner unteren Stirnscheibe 41.2 und der darin vorgesehenen zentralen Öffnung 42.2 auf den zentralen rohrstutzenförmigen Auslass 26 dichtend aufgesteckt und trennt die Rohseite 10 und die Reinseite 11 des Filters 1 voneinander. In Figur 23 rechts von dem Auslass 26 liegt der Einlass 26' für die zu filternde Flüssigkeit; links von dem Auslass 26 liegt die Entleerungsöffnung 27, die zum Entleeren des Filters 1 bei einem Wechsel des Filtereinsatzes 4 dient. Im Betriebszustand des Filters 1, wie ihn die Figur 23 darstellt, ist die Entleerungsöffnung 27 durch das Dichtelement 47 an der unteren Stirnscheibe 41.2 verschlossen.

Mit der zentralen Öffnung 42.1 in der oberen Stirnscheibe 41.1 ist der Filtereinsatz 4 auf den Ventilträger 30 des mit dem Gehäusedeckel 2' verbundenen Filterumgehungsventils 3 aufgesteckt und wird in dieser Lage mittels mehrerer Rastarme 49 auf der Oberseite der oberen Stirnscheibe 41.1 und eines Rastkragens 39' am Ventilträger 30 rastend gehalten.

Der Ventilträger 30 des Filterumgehungsventils 3 ist seinerseits mittels seines Haltekragens 36 an Halteelementen 23 in Form von Rastzungen am Gehäusedeckel 2' verrastet. Weiterhin besteht der Ventilträger 30 aus zwei mittels Rastarmen 38' miteinander verrasteten Trägerteilen, die die Feder 35 verliersicher im Ventilträger 30 halten.

Auch bei diesem Ausführungsbeispiel ist der Ventilkörper 32 im Ventilträger 30 axial, das heißt in Richtung der Längsmittelachse 25 des Filters 1, verschieblich geführt. Mittels der den Ventilkörper 32 teilweise umgebenden Feder 35 wird der Ventilkörper 32 gegen den im oberen Teil des Ventilträgers 30 ausgebildeten Ventilsitz 31 gedrückt, also in Schließrichtung vorbelastet. Für die Vorspannung der Feder 35 sorgt die Federstütze 45, die mit dem im Inneren des Filterstoffkörpers 40 angeordneten Stützkörper 44 verbunden oder einstückig ausgeführt ist, hier über mehrere in Umfangsrichtung verteilt angeordnete, schräg nach innen und oben verlaufende Speichen 45'.

Zu einer gewünschten Veränderung des Öffnungsdrucks des Filterumgehungsventils 3 genügt es auch bei dieser Ausführung des Filters 1, die axiale Lage oder Länge der Federstütze 45 zu ändern, wodurch die Vorbelastungskraft der Feder 35 entsprechend verändert wird. Eingriffe an sonstigen Teilen des Filterumgehungsventils 3 oder des übrigen Filters 1 sind auch hier nicht erforderlich, wenn ein geänderter Öffnungsdruck des Filterumgehungsventils 3 gewünscht ist.

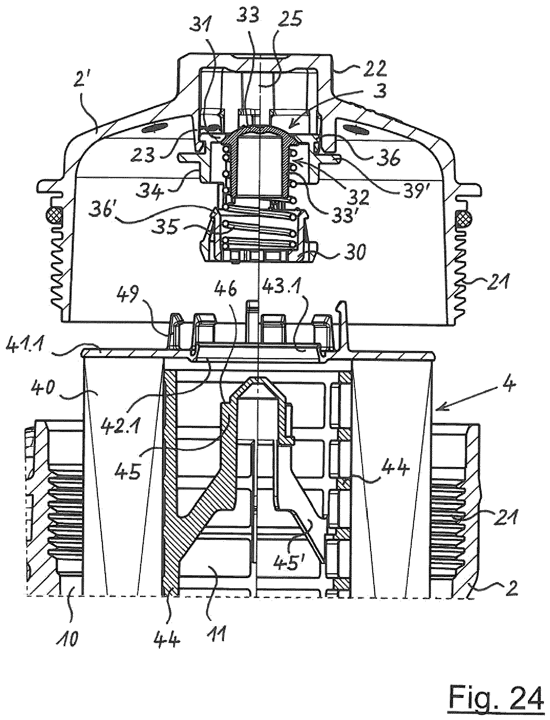

Figur 24 zeigt im Längsschnitt den Gehäusedeckel 2' und einen oberen Teil des Filtergehäuses 2 des Filters aus Figur 1 vor dem Anbringen des Gehäusedeckels 2', wobei der Gehäusedeckel 2' vom Filtergehäuse 2 noch nach oben hin beabstandet ist. Das Filterumgehungsventil 3 ist mit dem Gehäusedeckel 2' verrastet und bildet mit allen seinen Einzelteilen, mit Ausnahme der Federstütze 45, einen Teil des Gehäusedeckels 2'. Die auch hier als Schraubendruckfeder ausgeführte Feder 35 des Filterumgehungsventils 3 liegt mit ihrem oberen Ende wieder an dem Ventilkörper 32 an. Das untere Ende der hier noch gänzlich oder weitgehend entspannten Feder 35 liegt an einem unteren Teil des zweiteiligen Ventilträgers 30 an, so dass die Feder nicht aus dem Ventilträger 30 herausfallen kann.

Der Ventilkörper 32 besitzt auch hier einen kalottenförmigen Kopf 33 sowie darunter einen Schaft 33', um den herum sich die Feder 35 über einen Teil ihrer Länge erstreckt.

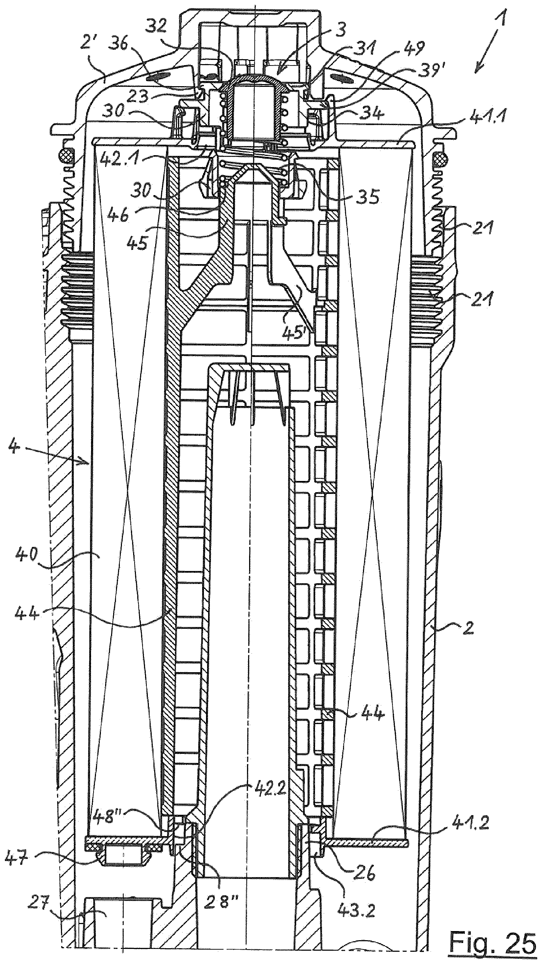

Unterhalb des Gehäusedeckels 2' mit dem Filterumgehungsventil 3 sind der obere Bereich des Filtergehäuses 2 und ein oberer Teil des Filtereinsatzes 4 sichtbar. Der Filtereinsatz 4 ist hier bereits in das Filtergehäuse 2 locker eingesteckt und sitzt, wie unten in Figur 25 dargestellt ist, mit seiner unteren Stirnscheibe 41.2 und der darin angebrachten zentralen Öffnung 42.2 schon auf dem rohrstutzenförmigen Auslass 26, jedoch noch nicht in der endgültigen Einbaulage.

In der oberen Stirnscheibe 41.1 liegt die zentrale Öffnung 42.1, die von der Radialdichtung 43.1 umgeben ist.

Von der Oberseite der oberen Stirnscheibe 41.1 erstrecken sich die Rastarme 49 nach oben, wobei Rastarme 49 zweier verschiedener Höhen oder Längen in einer gemischten Anordnung vorhanden sind. Der Einsatz von Rastarmen 49 zweier verschiedener Höhen oder Längen dient dazu, eine Sicherungsfunktion für den Fall bereitzustellen, dass bei dem Herausbewegen des Filtereinsatzes 4 aus dem Filtergehäuse 2 während des Abschraubens des Gehäusedeckels 2' vom Filtergehäuse 2 die ersten, kürzeren oder niedrigeren Rastarme 49 sich ungewollt von dem Rastkragen 39' lösen; es verbleiben dann immer noch die zweiten, höheren oder längeren Rastarme 49, die den Rasteingriff mit dem Rastkragen 39' aufrecht erhalten. So werden die gewünschte Mitnahme des Filtereinsatzes 4 und das Entfernen des Dichtelements 47 von der Entleerungsöffnung 27 beim Losschrauben des Gehäusedeckels 2' von Filtergehäuse 2 besonders sicher gewährleistet.

In Inneren des Filterstoffkörpers 40 liegt der diesen abstützende Stützkörper 44, mit dem die Federstütze 45 über die Speichen 45' einstückig verbunden ist. Nahe ihrem oberen Ende besitzt die Federstütze 45 eine Stützfläche 46, auf welcher sich das untere Ende der Feder 35 im zusammengebauten Zustand des Filters 1 zentriert und lagegesichert abstützt.

Zum Verbinden des Gehäusedeckels 2' mit dem Filtergehäuse 2 wird der Gehäusedeckel 2' zunächst in Axialrichtung nach unten bewegt und dann in Drehung versetzt, um die Schraubverbindung 21 in Eingriff zu bringen. Dieses Stadium des Verbindens ist in Figur 25 dargestellt. Hier ragt der Gehäusedeckel 2' schon um ein gewisses Maß in das Filtergehäuse 2 hinein, ist aber noch von seiner endgültigen Verbindungsposition entfernt. Die Federstütze 45 mit ihrer Stützfläche 46 ragt von unten her in den Ventilträger 30 hinein und liegt nun bereits in Anlage am unteren Ende der Feder 35. Gleichzeitig ist bereits ein erstes Verrasten des Filtereinsatzes 4 über einige der Rastarme 49 mit dem Ventilträger 30 erfolgt.

Bei einem Verdrehen des Gehäusedeckels 2' in Einschubrichtung bewegt sich der Gehäusedeckel 2' mit dem Filterumgehungsventil 3 weiter nach unten, das heißt in Richtung zum Filtergehäuse 2. Dabei wird über eine zwischen dem Ventilträger 30 und dem Filtereinsatz 4 bestehende Gleitreibung eine gemeinsame Drehung des Filtereinsatzes 4 mit dem Gehäusedeckel 2' bewirkt und der Filtereinsatz wird mit nach unten, das heißt weiter in das Filtergehäuse 2 hinein, bewegt.

Das Dichtelement 47 an der unteren Stirnscheibe 41.2, welches zum Verschließen der Entleerungsöffnung 27 dient, wird mittels einer Rampe 48" am unteren Ende des Stützkörpers 44 und einer damit zusammenwirkenden Nase 28" am Außenumfang des rohrstutzenförmigen Auslasses 26 in eine eingriffsgerechte Position zwangsgeführt. Sobald die in der Rampe 48" ausgebildete Stufe an die Nase 28" stößt, wird eine weitere Drehung des Filtereinsatzes 4 relativ zum Filtergehäuse 2 unterbunden und es ist nur noch ein axialer weiterer Vorschub des Filtereinsatzes 4 möglich, bei dem das Dichtelement 47 in dichtenden Eingriff mit der Entleerungsöffnung 27 gelangt. Wenn der Gehäusedeckel 2' seine endgültige Einschraublage relativ zum Filtergehäuse 2 und der Filtereinsatz 4 seine endgültige Einbaulage relativ zum Filtergehäuse 2 erreicht hat, wie in Figur 23 dargestellt ist, verschließt das Dichtelement 47 die Entleerungsöffnung 27 flüssigkeitsdicht. Der Filtereinsatz 4 ist nun mit allen oberseitigen Rastarmen 49 mit dem Ventilträger 30 verrastet und der Filter 1 ist betriebsbereit.

Solange der Filterstoffkörper 40 des Filtereinsatzes 4 für die zu filternde Flüssigkeit ausreichend durchlässig ist und im Filterbetrieb keinen zu großen Druckabfall verursacht, bleibt das Filterumgehungsventil 3 in seiner Schließstellung, wie sie in Figur 23 dargestellt ist.

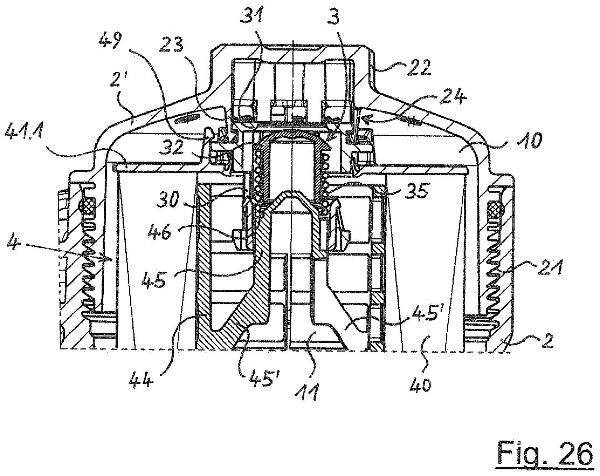

Übersteigt der Druckabfall über dem Filtereinsatz 4 einen vorgebbaren Grenzwert, zum Beispiel wegen Verstopfung des Filterstoffkörpers 40 durch darin abgeschiedene Schmutzpartikel aus der zu filternden Flüssigkeit oder wegen einer hohen Viskosität der zu filternden Flüssigkeit, drückt die zu filternde Flüssigkeit auf der Rohseite 10 mit einer solchen Kraft auf den Ventilkörper 32, dass dieser gegen die Kraft der Feder 35 von seinem Ventilsitz 31 weg bewegt wird, wodurch dann eine unmittelbare Strömungsverbindung von der Rohseite 10 über die Strömungsöffnungen 24 zwischen den Halteelementen 23 und durch das geöffnete Filterumgehungsventil 3 zur Reinseite 11 unter Umgehung des Filtereinsatzes 4 freigegeben ist. Dieser Zustand des Filters 1 mit geöffneten Filterumgehungsventil 3 ist in der Figur 26 gezeigt, die einen oberen Teil des Filters 1 darstellt. Bei Verminderung des Druckabfalls unter den Grenzwert schließt das Filterumgehungsventil 3 unter der Wirkung der Feder 35 wieder.

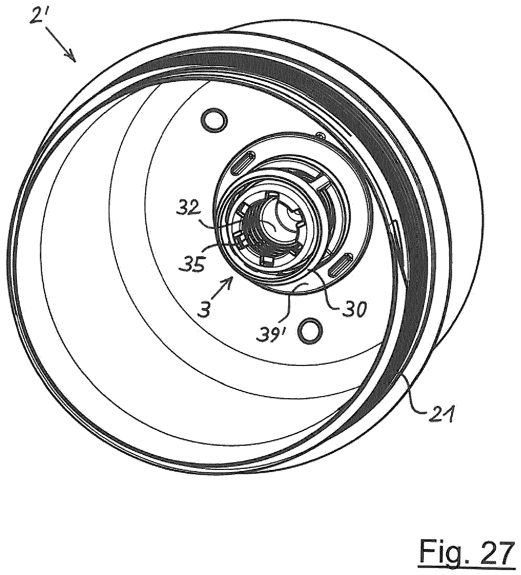

Figur 27 zeigt den Gehäusedeckel 2' aus den Figuren 23 bis 26 in einer Ansicht schräg von unten, so dass der Blick des Betrachters in das Innere des Gehäusedeckels 2' fällt. Am Außenumfang des dem Betrachter zugewandten Endes des Gehäusedeckels 2' ist der deckelseitige Teil des Schraubgewindes 21 angeordnet. Zentral im Inneren des Gehäusedeckels 2' ist das zu diesem gehörende Filterumgehungsventil 3 mit dem Ventilträger 30 und dem darin geführten Ventilkörper 32 sowie der Feder 35 angeordnet. Von dem Ventilträger 30 ragt der Rastkragen 39' radial nach außen hin vor.

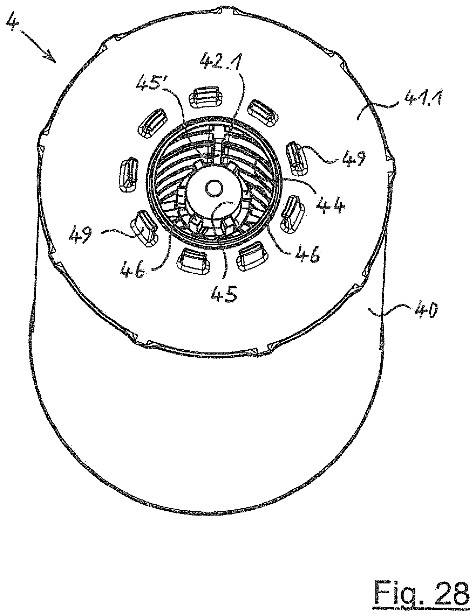

Figur 28 zeigt den Filtereinsatz 4 des Filters 1 aus Figur 23, in Ansicht schräg von oben, also auf die obere Stirnscheibe 41.1. Zwischen der oberen Stirnscheibe 41.1 und der hier nicht sichtbaren unteren Stirnscheibe liegt der Filterstoffkörper 40.

Im Zentrum der oberen Stirnscheibe 41.1 liegt die zentrale Öffnung 42.1, durch welche hindurch ein Teil des Stützkörpers 44 sowie die Federstütze 45 sichtbar sind. Die Federstütze 45 ist über die Speichen 45' mit dem Stützkörper 44 verbunden. An der Oberseite der Federstütze 45 ist die Stützfläche 46 für das untere Ende der in Figur 28 nicht dargestellten Feder 35 des Filterumgehungsventils 3 angeordnet.

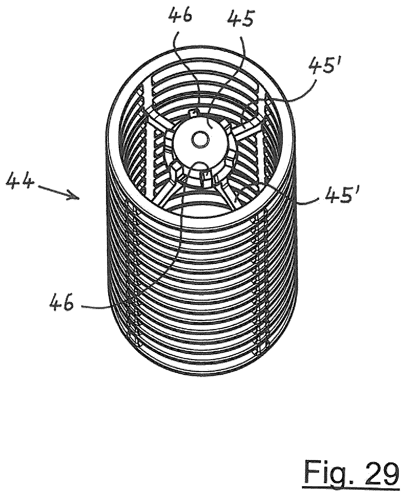

Figur 29 zeigt den Stützkörper 44 des Filtereinsatzes 4 aus Figur 28 als Einzelteil in Ansicht schräg von oben. Der Stützkörper 44 besteht aus in Umfangsrichtung und Axialrichtung verlaufenden Streben und bildet dadurch ein hohlzylindrisches Gitter. Von den axialen Streben des Stützkörpers 44 gehen radial nach innen sowie schräg nach oben die Speichen 45' aus, welche die zentral im Stützkörper 44 angeordnete Federstütze 45 mit ihrer Stützfläche 46 für die Feder 35 des Filterumgehungsventils 3 tragen. Durch den schrägen Verlauf der Speichen 45' sind diese besonders gut in der Lage, die durch die Feder 35 des Filterumgehungsventils 3 auf die Federstütze 45 ausgeübte axiale Kraft auch über eine lange Betriebsdauer schadlos und ohne Deformationen an den übrigen Stützkörper 44 und über diesen an das Filtergehäuse 2 weiterzuleiten. Somit bleibt ein einmal eingestellter Öffnungsdruck des Filterumgehungsventils 3 auch über eine längere Betriebszeit des Filtereinsatzes 4 und seines Stützkörpers 44 exakt erhalten.

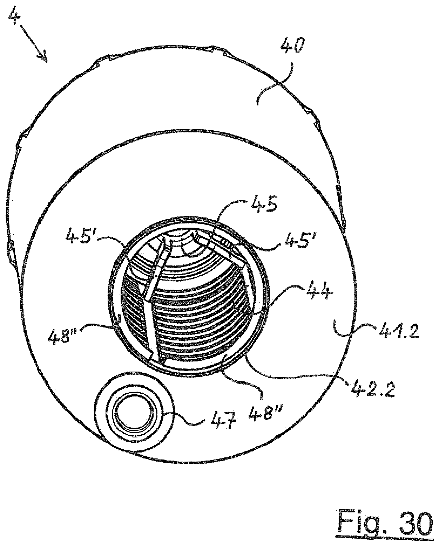

Figur 30 zeigt den Filtereinsatz 4 aus Figur 23 in Ansicht schräg von unten, so dass nun der Blick des Betrachters auf die Unterseite der unteren Stirnscheibe 41.2 fällt. An der vom Betrachter abgewandten Seite der Stirnscheibe 41.2 liegt der Filterstoffkörper 40 an.

Im Zentrum der Stirnscheibe 41.2 liegt deren zentrale Öffnung 42.2, durch welche hindurch ein Teil des Stützkörpers 44 und der mit diesem über die Speichen 45' verbundenen Federstütze 45 sichtbar sind. Ein unterer, der unteren Stirnscheibe 41.2 benachbarter Bereich des Stützkörpers 44 ist als umlaufende Rampe 48" ausgebildet, welche im Zusammenwirken mit der oben erwähnten Nase 28" am rohrstutzenförmigen Auslass 26 für eine zwangsweise Führung des Dichtelements 47 an der unteren Stirnscheibe 41.2 in eine für das Verschließen der Entleerungsöffnung 27 lagegerechte Verdrehstellung sorgt.

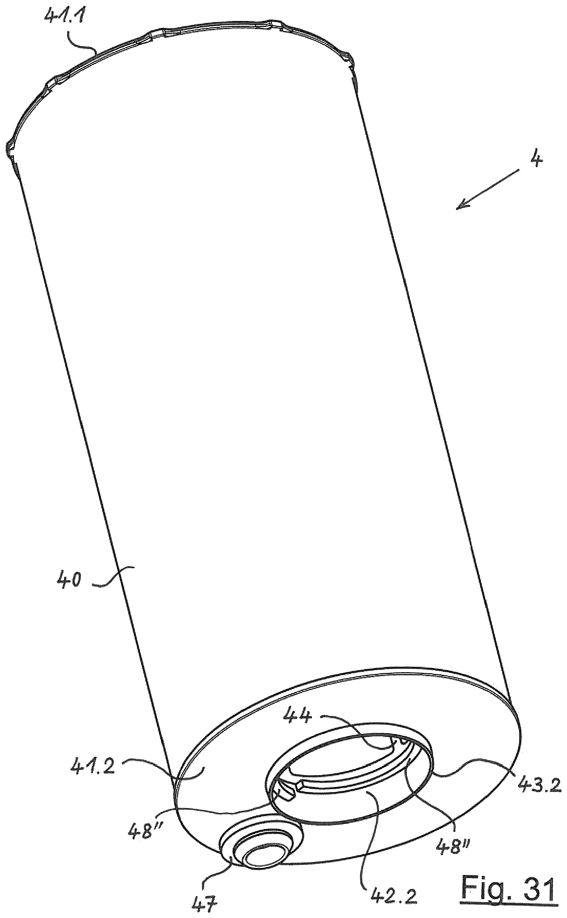

Figur 31 zeigt den Filtereinsatz 4 aus Figur 23 in einer Seitenansicht. Der hohlzylindrische Filterstoffkörper 40, der beispielsweise aus einer zickzackförmig in Sternform gefalteten Filterstoffbahn besteht, ist an seinen Stirnenden von der oberen Stirnscheibe 41.1 und der unteren Stirnscheibe 41.2 eingefasst, beispielsweise mittels gegenseitiger Verschweißung oder Verklebung. In der unteren Stirnscheibe 41.2 ist wieder deren zentrale Öffnung 42.2 mit der diese umgebenden Radialdichtung 43.2 sichtbar. Durch die Öffnung 42.2 hindurch ist ein kleiner Teil des Stützkörpers 44 mit der dessen unteres Ende bildenden umlaufenden Rampe 48" sichtbar. Exzentrisch liegt an der unteren Stirnscheibe 41.2 das Dichtelement 47 zum Verschließen der Entleerungsöffnung 27 des Filters 1.

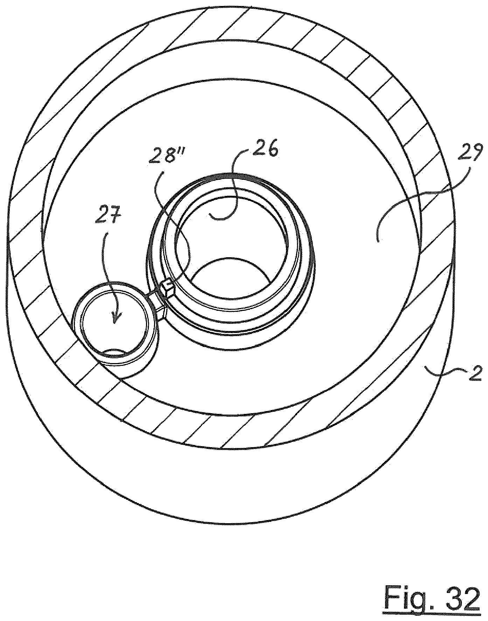

Figur 32 zeigt einen unteren Teil des Filtergehäuses 2 in einer geschnittenen Ansicht schräg von oben, wodurch hier der Blick des Betrachters auf den Gehäuseboden 29 des Filtergehäuses 2 fällt.

Im Zentrum des Gehäusebodens 29 liegt der rohrstutzenförmige Auslass 26, durch den im Betrieb des Filters gefilterte Flüssigkeit abströmt. Am Außenumfang des Auslasses 26 ist die Nase 28" angeformt, welche im Zusammenwirken mit der zuvor erwähnten Rampe 48" am unteren Ende des Stützkörpers 44 für die eingriffsgerechte Positionierung des Dichtelements 47 des Filtereinsatzes 4 relativ zur exzentrisch im Gehäuseboden 29 angeordneten Entleerungsöffnung 27 dient.

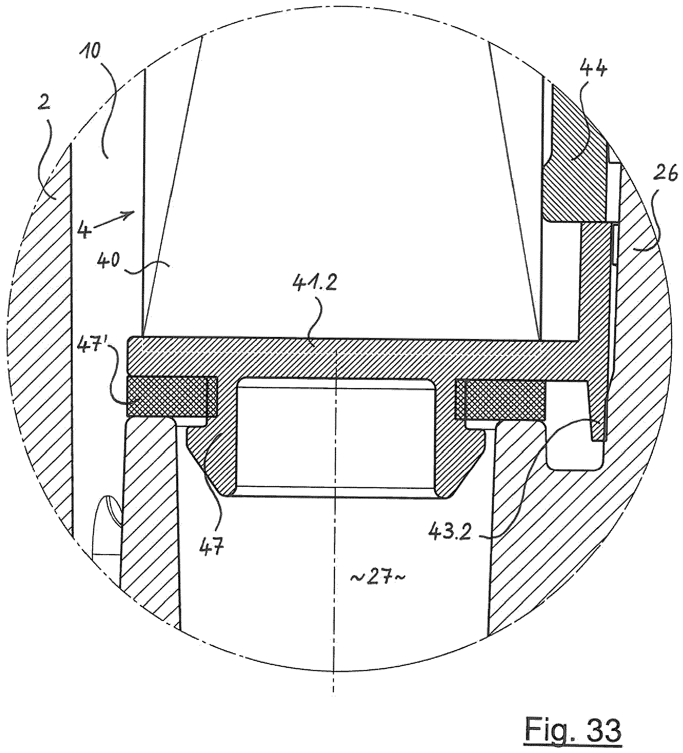

Figur 33 zeigt das in Figur 23 eingekreiste Detail des Filters 1 in vergrößerter Darstellung und verdeutlicht, wie im Betriebszustand des Filters 1 das Dichtelement 47 an der Unterseite der unteren Stirnscheibe 41.2 die Entleerungsöffnung 27 flüssigkeitsdicht verschließt. Hierbei ragt das Dichtelement 47 in die Entleerungsöffnung 27 hinein und liegt mit einem einen Teil des Dichtelement 47 bildenden elastischen Dichtring 47' dichtend auf einem oberen Rand der Entleerungsöffnung 27 auf.

Wenn zum Zweck eines Austausches des Filtereinsatzes 4 der Gehäusedeckel 2' von Filtergehäuses 2 losgedreht wird, wird der Filtereinsatz 4 über den Ventilträger 30 des Filterumgehungsventils 3 mit nach oben bewegt, wodurch die Entleerungsöffnung 27 zum Entleeren des Filtergehäuses 2 geöffnet und das Filtergehäuse 2 schon von der Flüssigkeit entleert wird, bevor der der Gehäusedeckel 2' ganz vom Filtergehäuse 2 gelöst ist und bevor der Filtereinsatz 4 aus dem Filtergehäuse 2 entnommen wird.

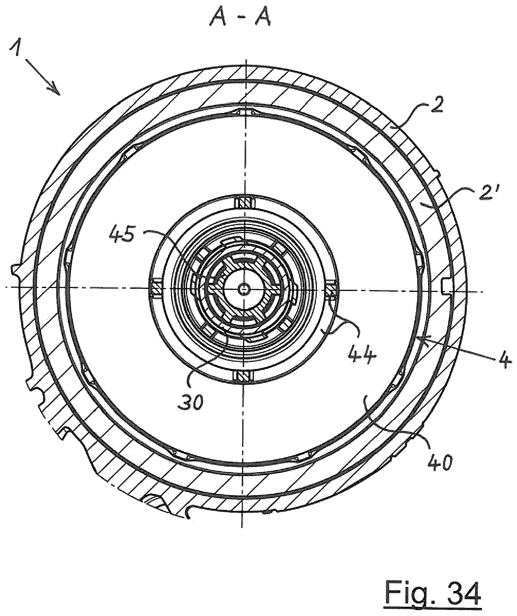

Figur 34 schließlich zeigt den Filter 1 in einem Querschnitt entlang der Schnittlinie A-A in Figur 23. Radial außen ist das Filtergehäuse 2 geschnitten, woran sich radial innen der mit dem Filtergehäuse 2 verschraubte Gehäusedeckel 2' anschließt. Weiter radial nach innen folgt dann der Filtereinsatz 4 mit dem geschnittenen, hohlzylindrischen Filterstoffkörper 40, an dessen Innenumfang der Stützkörper 44 stützend anliegt. Radial innen vom Stützkörper 44 liegt der Ventilträger 30, in welchen die Federstütze 45 hineinragt.

### Bezugszeichenliste:

| Zeichen | Bezeichnung |
|---|---|
| 1 | Filter |
| 10 | Rohseite |
| 11 | Reinseite |
| 2 | Filtergehäuse |
| 2' | Gehäusedeckel |
| 20 | Inneres von 2, 2' |
| 21 | Schraubgewinde |
| 22 | Werkzeugansatz |
| 23 | Halteelemente für 3 |
| 23' | Schweißverbindung |
| 24 | Strömungsöffnung(en) |
| 25 | Längsmittelachse |
| 26 | rohrstutzenförmiger Auslass |
| 26' | Einlass |
| 27 | Entleerungsöffnung |
| 28 | Rampe an 26 |
| 28' | Nut in 26 |
| 28" | Nase an 26 |
| 29 | Gehäuseboden |
| 3 | Filterumgehungsventil |
| 30 | Ventilträger |
| 31 | Ventilsitz |
| 32 | Ventilkörper |
| 33 | Kopf von 32 |
| 33' | Schaft von 32 |
| 34 | Dichtfläche außen an 30 |
| 35 | Feder |
| 36 | Haltekragen an 30 |
| 36' | Rastelemente an 30 |

| | |
|---|---|
| 37 | Längsschlitze in 30 |
| 38 | Federendkappe |
| 38' | Rastarme |
| 39 | Federzwischenstütze |
| 39' | Rastkragen an 30 für 49 |
| 4 | Filtereinsatz |
| 40 | Filterstoffkörper |
| 41.1 | obere Stirnscheibe |
| 41.2 | untere Stirnscheibe |
| 42.1 | zentrale Öffnung in 41.1 |
| 42.2 | zentrale Öffnung in 41.2 |
| 43.1 | Radialdichtung an 41.1 |
| 43.2 | Radialdichtung an 41.2 |
| 44 | Stützkörper in 4 |
| 45 | Federstütze an 44 |
| 45' | Speichen |
| 46 | Stützfläche |
| 47 | Dichtelement an 41.2 |
| 47' | Dichtring |
| 48 | Nase an 41.2 |
| 48" | Rampe an 41.2 |
| 49 | Rastarme auf 41.1 |

## Patentansprüche

1. Filter (1) mit einem Filtergehäuse (2), mit einem das Filtergehäuse (2) im Betrieb verschließenden, vom Filtergehäuse (2) abnehmbaren Gehäusedeckel (2'), mit einem Einlass für zu filternde Flüssigkeit und mit einem Auslass (26) für gefilterte Flüssigkeit, mit einem eine Rohseite (10) und eine Reinseite (11) des Filters (1) voneinander trennenden, austauschbaren Filtereinsatz (4) und mit einem Filterumgehungsventil (3), das aus einem Ventilsitz (31) und aus einem relativ dazu beweglich geführten, mit einer in Ventilschließrichtung wirkenden Kraft vorbelasteten Ventilkörper (32) besteht, wobei der Ventilsitz (31) deckelfest im oder am Gehäusedeckel (2') angeordnet ist, wobei der Ventilkörper (32) deckelfest im oder am Gehäusedeckel (2') geführt ist und wobei eine den Ventilkörper (32) in Ventilschließrichtung vorbelastende Feder (35) deckelfest im oder am Gehäusedeckel (2') geführt ist,
**dadurch gekennzeichnet,**
**dass** der Filtereinsatz (4) eine Federstütze (45) aufweist und dass im in den Filter (1) eingebauten Zustand des Filtereinsatzes (4) und bei am Filtergehäuse (2) angebrachtem Gehäusedeckel (2') die Feder (35) an ihrem vom Ventilkörper (32) abgewandten Ende mittels der Federstütze (45) abgestützt und vorgespannt ist.

2. Filter nach Anspruch 1, **dadurch gekennzeichnet, dass** das Filterumgehungsventil (3) einen Ventilträger (30) aufweist und dass in dem Ventilträger (30) der Ventilkörper (32) und die Feder (35) geführt sind.

3. Filter nach Anspruch 2, **dadurch gekennzeichnet, dass** der Ventilsitz (31) an oder in dem Ventilträger (30) ausgebildet ist.

4. Filter nach Anspruch 2 oder 3, **dadurch gekennzeichnet, dass** der Ventilträger (30) als separates Teil gefertigt und mit dem übrigen Gehäusedeckel (2') verbunden ist.

5. Filter nach Anspruch 4, **dadurch gekennzeichnet, dass** der Ventilträger (30) mit dem übrigen Gehäusedeckel (2') verrastet oder verschweißt oder verklebt oder verschraubt ist.

6. Filter nach Anspruch 4 oder 5, **dadurch gekennzeichnet, dass** der Ventilträger (30) an seinem Außenumfang unter Freilassung wenigstens einer von der Rohseite (10) zum Ventilsitz (31) führenden Strömungsöffnung (24) mit dem Gehäusedeckel (2') verbunden ist und dass der Ventilsitz (31) als zu einer Längsmittelachse (25) des Gehäusedeckels (2') konzentrische Durchbrechung im Ventilträger (30) ausgebildet ist.

7. Filter nach Anspruch 2 oder 3, **dadurch gekennzeichnet, dass** der Ventilträger (30) mit dem übrigen Gehäusedeckel (2') einstückig ausgeführt ist.

8. Filter nach Anspruch 7, **dadurch gekennzeichnet, dass** der Ventilträger (30) mit wenigstens einer von der Rohseite (10) zum Ventilsitz (31) führenden Strömungsöffnung (24) versehen ist und dass der Ventilsitz (31) als zu einer Längsmittelachse (25) des Gehäusedeckels (2') konzentrische Durchbrechung im Ventilträger (30) ausgebildet ist.

9. Filter nach einem der Ansprüche 1 bis 8, **dadurch gekennzeichnet, dass** die Feder (35) eine Schraubendruckfeder ist und den Ventilkörper (32) zumindest über einen Teil seiner Länge umgibt.

10. Filter nach einem der Ansprüche 1 bis 9, **dadurch gekennzeichnet, dass** der Filtereinsatz (4) in unterschiedlichen Ausführungen herstellbar ist, wobei der Filtereinsatz (4) eine einzige Federstütze (45) aufweist, die in unterschiedlichen Ausführungsformen herstellbar ist, wobei sich die unterschiedlichen Ausführungen des Filtereinsatzes (4) durch unterschiedliche axiale Längen seiner Federstütze (45) oder durch unterschiedliche axiale Lagen seiner Federstütze (45) unterscheiden und wobei dadurch die Vorspannung der Feder (35) und der Öffnungsdruck des Filterumgehungsventils (3) veränderbar sind.

11. Filter nach einem der Ansprüche 2 bis 9, **dadurch gekennzeichnet, dass** im oder am Ventilträger (30) eine das vom Ventilkörper (32) abgewandte Ende der Feder (35) abdeckende, relativ zum Ventilträger (30) begrenzt axial verschiebbare Federendkappe (38) oder Federzwischenstütze (39) geführt ist.

12. Filter nach Anspruch 11, **dadurch gekennzeichnet, dass** der Filter (1) in unterschiedlichen Ausführungen herstellbar ist, wobei sich die unterschiedlichen Ausführungen des Filters (1) durch unterschiedliche axiale Längen der Federendkappe (38) oder Federzwischenstütze (39) unterscheiden und wobei dadurch die Vorspannung der Feder (35) und der Öffnungsdruck des Filterumgehungsventils (3) veränderbar sind.

13. Filter nach einem der Ansprüche 2 bis 12, **dadurch gekennzeichnet, dass** der Ventilträger (30) an seinem Außenumfang eine Dichtfläche (34) für einen am Filtereinsatz (4) deckelseitig angeordneten Radialdichtring (43.1) aufweist.

14. Filter nach einem der Ansprüche 1 bis 13, **dadurch gekennzeichnet, dass** die am Filtereinsatz (4) vorhandene Federstütze (45) mit einem zentralen Stützkörper (44) oder mit einer Stirnscheibe (41.1, 41.2) des Filtereinsatzes (4) verbunden oder einstückig ist.

15. Filter nach einem der Ansprüche 1 bis 14, **dadurch gekennzeichnet, dass** das Filtergehäuse (2) an einem deckelfernen Gehäuseboden (29) eine exzentrische Entleerungsöffnung (27) aufweist, dass der Filtereinsatz (4) an seiner im Einbauzustand dem Gehäuseboden (29) zugewandten Seite ein Dichtelement (47) aufweist und dass im in den Filter (1) eingebauten Zustand des Filtereinsatzes (4) und bei am Filtergehäuse (2) angebrachtem Gehäusedeckel (2') die Feder (35) über die Federstütze (45) den Filtereinsatz (4) mit einer das Dichtelement (47) in dichtender Anlage an der Entleerungsöffnung (27) haltenden Kraft beaufschlagt.

16. Filter nach Anspruch 15, **dadurch gekennzeichnet, dass** der Filtereinsatz (4) an seiner im Einbauzustand dem Gehäuseboden (29) zugewandten Seite eine untere Stirnscheibe (41.2) mit einer zentralen Öffnung (42.2) aufweist, mittels welcher der Filtereinsatz (4) auf den rohrstutzenförmig ausgebildeten, zentral angeordneten Auslass (26) aufsteckbar ist, und dass die untere Stirnscheibe (41.2) auf ihrer zum Gehäuseboden (29) weisenden Seite über einen die Entleerungsöffnung (27) in jeder Stellung in Umfangsrichtung überdeckenden Bereich mit einem Dichtmaterialring als Dichtelement (47) belegt ist.

17. Filter nach Anspruch 15, **dadurch gekennzeichnet, dass** der Filtereinsatz (4) an seiner im Einbauzustand dem Gehäuseboden (29) zugewandten Seite eine untere Stirnscheibe (41.2) mit einer zentralen Öffnung (42.2) aufweist, mittels welcher der Filtereinsatz (4) auf den rohrstutzenförmig ausgebildeten, zentral angeordneten Auslass (26) aufsteckbar ist, dass die untere Stirnscheibe (41.2) auf ihrer zum Gehäuseboden (29) weisenden Seite eine Dichtmaterialscheibe oder einen Dichtmaterialring als Dichtelement (47) trägt, die/der im Durchmesser an die Entleerungsöffnung (27) angepasst ist, und dass am Filtereinsatz (4) und am rohrstutzenförmigen Auslass (26) Positionierführungsmittel angeordnet sind, mittels welchen der Filtereinsatz (4) bei seinem Einbauen in den Filter (1) in eine Verdrehstellung zwangsführbar ist, in der das Dichtelement (47) die Entleerungsöffnung (27) überdeckt.

18. Filter nach Anspruch 17, **dadurch gekennzeichnet, dass** die zusammenwirkenden Positionierführungsmittel durch wenigstens eine schraubenlinienförmig verlaufende Rampe (28) und eine daran anschließende axiale Nut (28') am Außenumfang des rohrstutzenförmigen Auslasses (26) einerseits und eine radial nach innen vorragende Nase (48) in der zentralen Öffnung (42.2) in der unteren Stirnscheibe (41.2) des Filtereinsatzes (4) andererseits gebildet sind, oder dass die zusammenwirkenden Positionierführungsmittel am Filtereinsatz (4) durch eine schraubenlinienförmig verlaufenden Rampe (48") mit einer Stufe darin einerseits und durch eine radial nach außen vorragende Nase (28") am Außenumfang des rohrstutzenförmigen Auslasses (26) andererseits gebildet sind.

19. Filtereinsatz (4), der mit einem Filter (1) nach einem der Ansprüche 1 bis 18 zusammenwirkt, mit einem an seinen Stirnenden von einer im Einbauzustand oberen Stirnscheibe (41.1) und unteren Stirnscheibe (41.2) eingefassten hohlzylindrischen Filterstoffkörper (40) und mit einem darin angeordneten gitterförmigen Stützkörper (44),
wobei der Filtereinsatz (4) eine Federstütze (45) aufweist, mittels welcher im in den Filter (1) eingebauten Zustand des Filtereinsatzes (4) die Feder (35) des Filterumgehungsventils (3) an ihrem von dem Ventilkörper (32) abgewandten Ende abstützbar und vorspannbar ist,
dass die Federstütze (45) an dem einen Teil des Filtereinsatzes (4) bildenden Stützkörper (44) ausgebildet ist,
dass die Federstütze (45) eine Stützfläche (46) aufweist, welche entsprechend der Form und Anordnung des der Federstütze (45) zugewandten Endes der Feder (35) oder der Federendkappe (38) oder der Federzwischenstütze (39) des Filterumgehungsventils (3) geformt und angeordnet ist, dass der Stützkörper (44) axiale Streben aufweist, von denen radial nach innen hin Speichen (45') ausgehen, welche die zentral im Stützkörper (44) angeordnete Federstütze (45) mit ihrer Stützfläche (46) tragen,
dass die obere Stirnscheibe (41.1) des Filtereinsatzes (4) eine zentrale Öffnung (42.1) besitzt, und
dass im Einbauzustand des Filtereinsatzes (4) die Federstütze (45) mit ihrer Stützfläche (46) von unten her in den radial innen vom Stützkörper (44) liegenden Ventilträger (30) hineinragt,
**dadurch gekennzeichnet,**
**dass** die zentrale Öffnung (42.1) von einer kreisringförmigen sich in radialer Richtung nach innen ausdehnenden Radialdichtung (43.1) umgeben ist, wobei mit der Öffnung (42.1) und der Radialdichtung (43.1) der Filtereinsatz (4) in einer axialen Richtung auf eine zylindrische Dichtfläche (34) außen an einem Ventilträger (30) des Filterumgehungsventils (3) aufsteckbar ist.

20. Filtereinsatz nach Anspruch 19, **dadurch gekennzeichnet, dass** er in unterschiedlichen Ausführungen herstellbar ist, wobei der Filtereinsatz (4) eine einzige Federstütze (45) aufweist, die in unterschiedlichen Ausführungsformen herstellbar ist, wobei sich die unterschiedlichen Ausführungen des Filtereinsatzes (4) durch unterschiedliche axiale Längen seiner Federstütze (45) oder durch unterschiedliche axiale Lagen seiner Federstütze (45) unterscheiden und wobei dadurch die Vorspannung der Feder (35) und der Öffnungsdruck des Filterumgehungsventils (3) veränderbar sind.

21. Filtereinsatz nach einem der Ansprüche 19 bis 20, **dadurch gekennzeichnet, dass** er an seiner im Einbauzustand einem Gehäuseboden (29) zugewandten Seite ein Dichtelement (47) aufweist und dass im in den Filter (1) eingebauten Zustand des Filtereinsatzes (4) und bei am Filtergehäuse (2) angebrachtem Gehäusedeckel (2') mittels der Feder (35) des Filterumgehungsventils (3) über die Federstütze (45) der Filtereinsatz (4) mit einer das Dichtelement (47) in dichtender Anlage an einer im Gehäuseboden (29) angeordneten exzentrischen Entleerungsöffnung (27) haltenden Kraft beaufschlagbar ist.

22. Filtereinsatz nach Anspruch 21, **dadurch gekennzeichnet, dass** er an seiner im Einbauzustand dem Gehäuseboden (29) zugewandten Seite eine untere Stirnscheibe (41.2) mit einer zentralen Öffnung (42.2) aufweist, mittels welcher der Filtereinsatz (4) auf einen rohrstutzenförmig ausgebildeten, zentral angeordneten Auslass (26) des Filters (1) aufsteckbar ist, und dass die untere Stirnscheibe (41.2) auf ihrer im Einbauzustand zum Gehäuseboden (29) weisenden Seite über einen die Entleerungsöffnung (27) in jeder Stellung in Umfangsrichtung überdeckenden Bereich mit einem Dichtmaterialring als Dichtelement (47) belegt ist.

23. Filtereinsatz nach Anspruch 21, **dadurch gekennzeichnet, dass** er an seiner im Einbauzustand dem Gehäuseboden (29) zugewandten Seite eine untere Stirnscheibe (41.2) mit einer zentralen Öffnung (42.2) aufweist, mittels welcher der Filtereinsatz (4) auf einen rohrstutzenförmig ausgebildeten, zentral angeordneten Auslass (26) des Filters (1) aufsteckbar ist, dass die untere Stirnscheibe (41.2) auf ihrer im Einbauzustand zum Gehäuseboden (29) weisenden Seite eine Dichtmaterialscheibe oder einen Dichtmaterialring als Dichtelement (47) trägt, die/der im Durchmesser an die Entleerungsöffnung (27) angepasst ist, und dass am Filtereinsatz (4) Positionierführungsmittel angeordnet sind, mittels welchen der Filtereinsatz (4) bei seinem Einbauen in den Filter (1) im Zusammenwirken mit am rohrstutzenförmigen Auslass (26) angeordneten weiteren Positionierführungsmitteln in eine Verdrehstellung, in der das Dichtelement (47) mit der Entleerungsöffnung (27) deckungsgleich ist, zwangsführbar ist.

24. Filtereinsatz nach Anspruch 23, **dadurch gekennzeichnet, dass** die Positionierführungsmittel am Filtereinsatz (4) durch eine radial nach innen vorragende Nase (48) in der zentralen Öffnung (42.2) in der unteren Stirnscheibe (41.2) gebildet sind, wobei die Nase (48) beim Einbauen des Filtereinsatzes (4) in den Filter (1) mit wenigstens einer schraubenlinienförmig verlaufenden Rampe (28) und einer daran anschließenden axialen Nut (28') am Außenumfang des rohrstutzenförmigen Auslasses (26) positionierend zusammenwirkt, oder dass die Positionierführungsmittel am Filtereinsatz (4) durch eine schraubenlinienförmig verlaufenden Rampe (48") mit einer Stufe darin gebildet sind, wobei die Rampe (48") beim Einbauen des Filtereinsatzes (4) in den Filter (1) mit einer radial nach außen vorragenden Nase (28") am Außenumfang des rohrstutzenförmigen Auslasses (26) positionierend zusammenwirkt.

## Claims

1. A filter (1) having a filter housing (2), a housing lid (2') closing off the filter housing in operation, being removable from the filter housing, an inlet for liquid to be filtered and an outlet (26) for filtered liquid, an exchangeable filter insert (4) separating a raw side (10) and a clean side (11) of the filter (1) from each other, and with a filter bypass valve (3) that is comprised of a valve seat (31) and a valve body (32) that is movably guided relative thereto, biased with a force acting in valve closing direction, wherein the valve seat (31) is cover-fixedly arranged in or on the housing lid (2'), wherein the valve body (32) is cover-fixedly guided in or on the housing lid (2') and wherein a spring (35) biasing the valve body (32) in valve closing direction is cover-fixedly guided in or on the housing lid (2'), **characterized in that**
the filter insert (4) includes a spring support (45), and **in that** in the state, in which the filter insert (4) is installed in the filter (1), and with the housing lid (2') attached to the filter housing (2), the spring (35) is supported and biased by means of the spring support (45) that on its end is facing away from the valve body (32).

2. The filter according to claim 1, **characterized in that** the filter bypass valve (3) includes a valve carrier (30) and **in that** in the valve carrier (30) the valve body (32) and the spring (35) are guided.

3. The filter according to claim 2, **characterized in that** the valve seat (31) is formed on or in the valve carrier (30).

4. The filter according to claim 2 or 3, **characterized in that** the valve carrier (30) is manufactured as a separate part and is connected with the remaining housing lid (2').

5. The filter according to claim 4, **characterized in that** the valve carrier (30) is locked or welded or bonded or screwed with the remaining housing lid (2').

6. The filter according to claim 4 or 5, **characterized in that** the valve carrier (30) is on its outer circumference connected with the housing lid (2') while leaving free at least one flow opening leading from the raw side (10) to the valve seat (31), and **in that** the valve seat (31) is formed as breakthrough in the valve carrier (30), concentric to a longitudinal central axis (25) of the housing lid (2').

7. The filter according to claim 2 or 3, **characterized in that** the valve carrier (30) is formed integrally with the remaining housing lid (2').

8. The filter according to claim 7, **characterized in that** the valve carrier (30) is provided with at least one flow opening (24) leading from the raw side (10) to the valve seat (31) and **in that** the valve seat (31) is formed as breakthrough in the valve carrier (30), concentric to a longitudinal central axis (25) of the housing lid (2').

9. The filter according to one of claims 1 to 8, **characterized in that** the spring (35) is a helical compression spring and encloses the valve body (32) at least over a portion of its length.

10. The filter according to one of claims 1 to 9, **characterized in that** the filter insert (4) is manufacturable in various designs, wherein the filter insert (4) includes one single spring support (45) that is manufacturable in various designs, wherein the various designs of the filter insert (4) differ in various axial lengths of its spring support (45) or in various axial positions of its spring support (45), and wherein the bias of the spring (35) and the opening pressure of the filter bypass valve (3) are thereby changeable.

11. The filter according to one of claims 2 to 9, **characterized in that** in or on the valve carrier (30) a spring end cap (38) or spring intermediate support (39) is guided that is covering the end of the spring (35) facing away from the valve body (32) and is axially displaceable to a limited extent relative to the valve carrier (30).

12. The filter according to claim 11, **characterized in that** the filter (1) is manufacturable in various designs, wherein the various designs of the filter (1) differ in various axial lengths of the spring end cap (38) or spring intermediate support (39), and wherein the bias of the spring (35) and the opening pressure of the filter bypass valve (3) are thereby changeable.

13. The filter according to one of claims 2 to 12, **characterized in that** the valve carrier (30) includes, on its outer circumference, a sealing surface (34) for a radial sealing ring (43.1) arranged on the cover side of the filter insert (4).

14. The filter according to one of claims 1 to 13, **characterized in that** the spring support (45) present on the filter insert (4) is connected with or integrally with a central support body (44) or with an end disc (41.1, 41.2) of the filter insert (4).

15. The filter according to one of claims 1 to 14, **characterized in that** the filter housing (2), on a housing bottom (29) remote from the lid, includes an eccentric discharge opening (27), **in that** the filter insert (4) includes a sealing element (47) on its side that in the installed state is facing the housing bottom (29), and **in that** in the state, in which the filter insert (4) is installed in the filter (1), and with the housing lid (2') attached to the filter housing (2) the spring (35) is, via the spring support (45), applying a force holding the sealing element (47) in sealing abutment on the discharge opening (27) to the filter insert (4).

16. The filter according to claim 15, **characterized in that** the filter insert (4), on its side that in the installed state is facing the housing bottom (29), includes a lower end disc (41.2) with a central opening (42.2), by means of which the filter insert (4) is pluggable onto the pipe socket shaped, centrally arranged outlet (26), and **in that** the lower end disc (41.2) is topped with a sealing material ring as sealing element (47) on its side facing the housing bottom (29) over an area circumferentially covering the discharge opening (27) in each position.

17. The filter according to claim 15, **characterized in that** the filter insert (4), on its side that in the installed state is facing the housing bottom (29), includes a lower end disc (41.2) having a central opening (42.2), by means of which the filter insert (4) is pluggable onto the pipe socket shaped, centrally arranged outlet, **in that** the lower end disc (41.2), on its side facing the housing bottom (29), carries a sealing material disc or a sealing material ring as sealing element (47) that is adapted in diameter to the discharge opening (27), and **in that** on the filter insert (4) and on the pipe socket shaped outlet (26) positioning guiding means are arranged, by means of which the filter insert (4) is, when installed into the filter (1), compulsorily guided into a rotational position, in which the sealing element (47) covers the discharge opening (27).

18. The filter according to claim 17, **characterized in that** the cooperating positioning guiding means are, on the one hand, formed by at least one ramp (28) running helically and an adjoining axial groove (28') on the outer circumference of the pipe socket shaped outlet (26) and, on the other hand, by a nose (48) projecting radially inwards in the central opening (42.2) in the lower end disc (41.2) of the filter insert (4), or **in that** the cooperating positioning guiding means are, on the one hand, formed on the filter insert (4) by a ramp (48") running helically having a step therein and, on the other hand, by a nose (28") projecting radially outward on the outer circumference of the pipe socket shaped outlet (26).

19. A filter insert (4) cooperating with a filter (1) according to one of claims 1 to 18 with a hollow cylindrical filter cloth body (40) that on its end faces is framed by one of, in installed state, upper end disc (41.1) and lower end disc (41.2) and with a lattice-shaped support body (44) arranged therein, wherein the filter insert (4) includes a spring support (45), by means of which in the state, in which the filter insert (4) is installed in the filter (1), the spring (35) of the filter bypass valve (3) can be supported and biased on its end facing away from the valve body (32),
wherein the spring support (45) is formed on the support body (44) forming one part of the filter insert (4),
wherein the spring support (45) includes a support surface (46) which is shaped and arranged according to the shape and arrangement of that end of the spring (35) or the spring end cap (38) or the spring intermediate support (39) of the filter bypass valve (3) that is facing the spring support (45),
wherein the support body (44) includes axial struts from which spokes (45') run out radially inwards carrying the spring support (45) centrally arranged in the support body (44) with its support surface (46),
wherein the upper end disc (41.1) of the filter insert (4) has a central opening (42.1), and
wherein the spring support (45) with its support surface (46) in the installed state of the filter insert (4) projects into the valve carrier (30) lying radially inwards from the support body (44) from below,
**characterized in that**
the central opening (42.1) is enclosed by an annular radial direction (43.1) extending in radial direction, wherein with the opening (42.1) and the radial direction (43.1) the filter insert (4) is pluggable in an axial direction onto a cylindrical sealing surface (34) externally on a valve carrier (30) of the filter bypass valve (3).

20. The filter insert according to claim 19, **characterized in that** it is manufacturable in various designs, wherein the filter insert (4) includes one single spring support (45) manufacturable in various designs, wherein the various designs of the filter insert (4) differ in various axial lengths of its spring support (45) or in various axial positions of its spring support (45), and wherein the bias of the spring (35) and the opening pressure of the filter bypass valve (3) are thereby changeable.

21. The filter insert according to one of claims 19 to 20, **characterized in that** it, on its side that in the installed state is facing a housing bottom (29), includes a sealing element (47), and **in that** in the state, in which the filter insert (4) is installed in the filter (1), and with the housing lid (2') attached to the filter housing (2) using the spring (35) of the filter bypass valve (39) the filter insert (4) is, via the spring support (45), applicable with a force holding the sealing element (47) in sealing abutment on an eccentric discharge opening (27) arranged in the housing bottom (29).

22. The filter insert according to claim 21, **characterized in that**, on its side that in the installed state is facing the housing bottom (29), it includes a lower end disc (41.2) with a central opening (42.2), by means of which the filter insert (4) is pluggable onto a pipe socket shaped, centrally arranged outlet (26) of the filter (1), and **in that** the lower end disc (41.2), on its side that in the installed state is facing the housing bottom (29), is topped with a sealing material ring as sealing element (47) over an area circumferentially covering the discharge opening (27) in each position.

23. The filter insert according to claim 21, **characterized in that**, on its side that in the installed state is facing the housing bottom (29), it includes a lower end disc (41.2) with a central opening (42.2), by means of which the filter insert (4) is pluggable onto a pipe socket shaped, centrally arranged outlet (26) of the filter (1), **in that** the lower end disc (41.2), on its side that in the installed state is facing the housing bottom (29), carries a sealing material disc or a sealing material ring as sealing element (47), that in diameter is adapted to the discharge opening (27), and **in that** on the filter insert (4) positioning guiding means are arranged, by means of which the filter insert (4), when being installed into the filter (1) when cooperating with further positioning guiding means arranged on the pipe socket shaped outlet (26) is compulsorily guidable into a rotational position, in which the sealing element (47) is congruent with the discharge opening.

24. The filter insert according to claim 23, **characterized in that** the positioning guiding means on the filter insert (4) are formed by a nose (48) projecting radially inwards in the central opening (42.2) in the lower end disc (41.2), wherein the nose (48), when installing the filter insert (4) into the filter (1), cooperates in a positioning manner with at least one ramp (28) running helically and an adjoining axial groove (28') on the outer circumference of the pipe socket shaped outlet (26), or **in that** the positioning guiding means on the filter insert (4) are formed by a ramp (48") running helically having a step therein, wherein the ramp (48") when installing the filter insert (4) into the filter (1) cooperates in a positioning manner with a nose (28") projecting radially outwards on the outer circumference of the pipe socket shaped outlet (26).

## Revendications

1. Filtre (1) doté d'un boîtier de filtre (2), d'un couvercle de boîtier (2') fermant le boîtier de filtre (2) en fonctionnement et pouvant être retiré du boîtier de filtre (2), doté d'une entrée pour du liquide à filtrer et d'une sortie (26) pour du liquide filtré, d'un insert de filtre (4) échangeable séparant l'un de l'autre un côté brut (10) et un côté propre (11) dudit filtre (1), et d'une soupape de contournement de filtre (3) constituée d'un siège de soupape (31) et d'un corps de soupape (32) guidé de manière mobile par rapport au siège de soupape et précontraint par une force agissant dans le sens de la fermeture de la soupape, ledit siège de soupape (31) étant disposé de manière solidaire du couvercle dans ou sur le couvercle du boîtier (2'), le corps de soupape (32) étant guidé de manière solidaire du couvercle dans ou sur le couvercle du boîtier (2') et un ressort (35) précontraignant le corps de soupape (32) dans le sens de la fermeture de la soupape étant guidé de manière solidaire du couvercle dans ou sur ledit couvercle du boîtier (2'), **caractérisé en ce**
**que** l'insert de filtre (4) présente un appui de ressort (45) et que, lorsque l'insert de filtre (4) est montée dans le filtre (1) et que le couvercle de boîtier (2') est monté sur le boîtier de filtre (2), le ressort (35) est soutenu et précontraint en tension à son extrémité opposée au corps de soupape (32) au moyen dudit appui de ressort (45).

2. Filtre selon la revendication 1, **caractérisé en ce que** la soupape de contournement de filtre (3) présente un support de soupape (30) et **en ce que** le corps de soupape (32) et le ressort (35) sont guidés dans le support de soupape (30).

3. Filtre selon la revendication 2, **caractérisé en ce que** le siège de soupape (31) est conçu sur ou dans le support de soupape (30).

4. Filtre selon la revendication 2 ou 3, **caractérisé en ce que** le support de soupape (30) est réalisé en tant que pièce séparée et est relié au reste du couvercle de boîtier (2').

5. Filtre selon la revendication 4, **caractérisé en ce que** le support de soupape (30) est encliqueté ou soudé ou collé ou vissé avec le reste du couvercle de boîtier (2').

6. Filtre selon la revendication 4 ou 5, **caractérisé en ce que** le support de soupape (30) est relié au couvercle de boîtier (2') sur sa périphérie extérieure en laissant libre au moins une ouverture d'écoulement (24) menant du côté brut (10) au siège de soupape (31), et **en ce que** le siège de soupape (31) est conçu dans le support de soupape (30) sous la forme d'un ajour concentrique à un axe médian longitudinal (25) du couvercle de boîtier (2').

7. Filtre selon la revendication 2 ou 3, **caractérisé en ce que** le support de soupape (30) est réalisé d'un seul tenant avec le reste du couvercle de boîtier (2').

8. Filtre selon la revendication 7, **caractérisé en ce que** le support de soupape (30) est muni d'au moins une ouverture d'écoulement (24) menant du côté brut (10) au siège de soupape (31), et **en ce que** le siège de soupape (31) est conçu dans le support de soupape (30) sous la forme d'un ajour concentrique à un axe médian longitudinal (25) du couvercle de boîtier (2').

9. Filtre selon l'une quelconque des revendications 1 à 8, **caractérisé en ce que** le ressort (35) est un ressort hélicoïdal de compression et entoure le corps de soupape (32) au moins sur une partie de sa longueur.

10. Filtre selon l'une quelconque des revendications 1 à 9, **caractérisé en ce que** l'insert de filtre (4) peut être fabriqué dans différentes versions, ledit insert de filtre (4) présentant un seul appui de ressort (45) qui peut être fabriqué dans des modes de réalisation différents, les différentes réalisations de l'insert de filtre (4) se distinguant par des longueurs axiales différentes de son appui de ressort (45) ou par des positions axiales différentes de son appui de ressort (45), et la précontrainte du ressort (35) et la pression d'ouverture de la soupape de contournement de filtre (3) pouvant ainsi être modifiées.

11. Filtre selon l'une quelconque des revendications 2 à 9, **caractérisé en ce que** dans ou sur le support de soupape (30) est guidé un capuchon d'extrémité de ressort (38) ou un appui intermédiaire de ressort (39) recouvrant l'extrémité du ressort (35) opposée au corps de soupape (32) et pouvant être déplacé axialement de manière limitée par rapport au support de soupape (30).

12. Filtre selon la revendication 11, **caractérisé en ce que** ledit filtre (1) peut être fabriqué dans différentes versions, les différentes réalisations du filtre (1) se distinguant par des longueurs axiales différentes du capuchon d'extrémité de ressort (38) ou du support intermédiaire de ressort (39), et la précontrainte du ressort (35) et la pression d'ouverture de la soupape de contournement de filtre (3) pouvant ainsi être modifiées.

13. Filtre selon l'une quelconque des revendications 2 à 12, **caractérisé en ce que** le support de soupape (30) présente sur sa périphérie extérieure une surface d'étanchéité (34) pour une bague d'étanchéité radiale (43.1) disposée sur l'élément filtrant (4) du côté du couvercle.

14. Filtre selon l'une quelconque des revendications 1 à 13, **caractérisé en ce que** l'appui de ressort (45) existant sur l'insert de filtre (4) est relié ou fait partie intégrante d'un corps d'appui central (44) ou d'un disque frontal (41.1, 41.2) de l'insert de filtre (4).

15. Filtre selon l'une quelconque des revendications 1 à 14, **caractérisé en ce que** le boîtier de filtre (2) présente une ouverture de vidange excentrique (27) sur un fond de boîtier (29) éloigné du couvercle, **en ce que** l'insert de filtre (4) présente un élément d'étanchéité (47) sur son côté tourné vers le fond de boîtier (29) à l'état monté, et **en ce que**, lorsque l'insert de filtre (4) est monté dans le filtre (1) et lorsque le couvercle de boîtier (2') est monté sur le boîtier de filtre (2), le ressort (35) sollicite l'insert de filtre (4) par l'intermédiaire de l'appui de ressort (45) avec une force maintenant l'élément d'étanchéité (47) en appui étanche contre l'ouverture de vidange (27).

16. Filtre selon la revendication 15, **caractérisé en ce que** l'insert de filtre (4) présente, sur son côté tourné vers le fond du boîtier (29) à l'état monté, un disque frontal inférieur (41.2) avec une ouverture centrale (42.2) au moyen de laquelle l'insert de filtre (4) peut être enfiché sur la sortie (26) disposée au centre, et conçu en forme de tubulure, et **en ce que** le disque frontal inférieur (41.2) est recouvert, sur son côté orienté vers le fond du boîtier (29), d'une bague en matériau d'étanchéité servant d'élément d'étanchéité (47) sur une zone recouvrant l'ouverture de vidange (27) dans chaque position dans la direction périphérique.

17. Filtre selon la revendication 15, **caractérisé en ce que** l'insert de filtre (4) présente, sur son côté tourné vers le fond du boîtier (29) à l'état monté, un disque frontal inférieur (41.2) avec une ouverture centrale (42.2), au moyen de laquelle l'insert de filtre (4) peut être enfiché sur la sortie (26) disposée au centre et conçue en forme de tubulure, **en ce que** le disque frontal inférieur (41.2) porte, sur son côté orienté vers le fond du boîtier (29), un disque ou un anneau de matériau d'étanchéité servant d'élément d'étanchéité (47), dont le diamètre est adapté à l'ouverture de vidange (27), et **en ce que** des moyens de guidage de positionnement sont disposés sur l'insert de filtre (4) et sur la sortie (26) en forme de tubulure, au moyen desquels l'insert de filtre (4) peut être guidé de force, lors de son montage dans le filtre (1), dans une position de rotation dans laquelle l'élément d'étanchéité (47) recouvre l'ouverture de vidange (27).

18. Filtre selon la revendication 17, **caractérisé en ce que** les moyens de guidage de positionnement coopérants sont constitués d'une part d'au moins une rampe (28) s'étendant en forme de ligne hélicoïdale et une rainure axiale (28') s'y raccordant sur la périphérie extérieure de la sortie (26) en forme de tubulure et d'autre part par un ergot (48) faisant saillie radialement vers l'intérieur dans l'ouverture centrale (42.2) dans le disque frontal inférieur (41.2) de l'insert de filtre (4) d'autre part, ou **en ce que** les moyens de guidage de positionnement coopérant sur l'insert de filtre (4) sont formés par une rampe (48") s'étendant de manière hélicoïdale avec un gradin dans celle-ci d'une part et par un nez (28") faisant saillie radialement, d'autre part, vers l'extérieur sur la périphérie extérieure de la sortie (26) en forme de tubulure.

19. Insert de filtre (4) qui coopère avec un filtre (1) selon l'une quelconque des revendications 1 à 18, doté d'un corps de matière filtrante (40) cylindrique creux bordé à ses extrémités frontales par un disque frontal supérieur (41.1) et un disque frontal inférieur (41.2) à l'état monté et doté d'un corps d'appui (44) en forme de grille disposé dans celui-ci,
l'insert de filtre (4) présentant un appui de ressort (45) au moyen duquel, lorsque l'insert de filtre (4) est monté dans le filtre (1), le ressort (35) de la soupape de contournement de filtre (3) peut s'appuyer et être précontraint à son extrémité opposée au corps de soupape (32),
que l'appui de ressort (45) est conçu sur le corps d'appui (44) constituant une partie de l'insert de filtre (4),
que l'appui de ressort (45) présente une surface d'appui (46) qui est formée et agencée en fonction de la forme et de la disposition de l'extrémité du ressort (35) ou du capuchon d'extrémité de ressort (38) ou de l'appui intermédiaire de ressort (39) de la soupape de contournement de filtre (3) tournée vers l'appui de ressort (45),
que le corps d'appui (44) présente des entretoises axiales desquelles partent radialement vers l'intérieur des rayons (45') qui portent l'appui élastique (45) disposé au centre du corps d'appui (44) avec sa surface d'appui (46),
que le disque frontal supérieur (41.1) de l'insert de filtre (4) possède une ouverture centrale (42.1), et
que, lorsque l'insert de filtre (4) est monté, l'appui de ressort (45) pénètre par sa surface d'appui (46) depuis le bas dans le support de soupape (30) situé radialement à l'intérieur du corps d'appui (44),
**caractérisé en ce**
**que** l'ouverture centrale (42.1) est entourée d'un joint radial (43.1) en forme d'anneau circulaire s'étendant dans la direction radiale, l'insert de filtre (4) pouvant être enfiché avec l'ouverture (42.1) et le joint radial (43.1) dans une direction axiale sur une surface d'étanchéité cylindrique (34) à l'extérieur sur un support de soupape (30) de la soupape de contournement de filtre (3).

20. Insert de filtre selon la revendication 19, **caractérisé en ce qu'**il peut être fabriqué dans différentes versions, l'insert de filtre (4) présentant un seul appui de ressort (45) qui peut être fabriqué dans des modes de réalisation différents, les différentes réalisations de l'insert de filtre (4) se distinguant par des longueurs axiales différentes de son appui de ressort (45) ou par des positions axiales différentes de son appui de ressort (45), et la précontrainte du ressort (35) et la pression d'ouverture de la soupape de contournement de filtre (3) pouvant ainsi être modifiées.

21. Insert de filtre selon l'une quelconque des revendications 19 à 20, **caractérisé en ce qu'**il présente un élément d'étanchéité (47) sur son côté tourné vers un fond de boîtier (29) à l'état monté, et **en ce que**, lorsque l'insert de filtre (4) est monté dans le filtre (1) et lorsque le couvercle de boîtier (2') est monté sur le boîtier de filtre (2) au moyen du ressort (35) de la soupape de contournement de filtre (3), l'insert de filtre (4) peut être soumis, par l'intermédiaire de l'appui de ressort (45), à une force maintenant l'élément d'étanchéité (47) en contact étanche avec une ouverture de vidange excentrique (27) disposée dans le fond (29) du boîtier.

22. Insert de filtre selon la revendication 21, **caractérisé en ce qu'**il présente, sur son côté tourné vers le fond du boîtier (29) à l'état monté, un disque frontal inférieur (41.2) avec une ouverture centrale (42.2) au moyen de laquelle l'insert de filtre (4) peut être enfiché sur une sortie (26) du filtre (1) disposée au centre et conçue en forme de tubulure, et **en ce que** le disque frontal inférieur (41.2) est recouvert, sur son côté orienté vers le fond du boîtier (29) à l'état monté, d'une bague en matériau d'étanchéité servant d'élément d'étanchéité (47) sur une zone recouvrant l'ouverture de vidange (27) dans chaque position dans la direction périphérique.

23. Insert de filtre selon la revendication 21, **caractérisé en ce qu'**il présente, sur son côté tourné vers le fond du boîtier (29) à l'état monté, un disque frontal inférieur (41.2) avec une ouverture centrale (42.2), au moyen de laquelle l'insert de filtre (4) peut être enfiché sur une sortie (26) du filtre (1) disposée au centre et conçue en forme de tubulure, **en ce que** le disque frontal inférieur (41.2) porte, sur son côté orienté vers le fond du boîtier (29) à l'état monté, un disque ou un anneau de matériau d'étanchéité servant d'élément d'étanchéité (47), dont le diamètre est adapté à l'ouverture de vidange (27), et **en ce que** des moyens de guidage de positionnement sont disposés sur l'insert de filtre (4) au moyen desquels l'insert de filtre (4) peut être guidé de force, lors de son montage dans le filtre (1), en coopération avec d'autres moyens de guidage de positionnement disposés sur la sortie (26) en forme de tubulure, dans une position de rotation dans laquelle l'élément d'étanchéité (47) coïncide avec l'ouverture de vidange (27).

24. Insert de filtre selon la revendication 23, **caractérisé en ce que** les moyens de guidage de positionnement sur l'insert de filtre (4) sont formés par un nez (48) faisant saillie radialement vers l'intérieur dans l'ouverture centrale (42.2) dans le disque frontal inférieur (41.2), le nez (48) coopérant, lors du montage de l'insert de filtre (4) dans le filtre (1), avec au moins une rampe (28) s'étendant en forme de ligne hélicoïdale et une rainure axiale (28') s'y raccordant sur la périphérie extérieure de la sortie (26) en forme de tubulure, pour assurer le positionnement, ou **en ce que** les moyens de guidage de positionnement sur l'insert de filtre (4) sont formés par une rampe (48") s'étendant en forme de ligne hélicoïdale avec un gradin à l'intérieur, la rampe (48") coopérant pour le positionnement, lors du montage de l'insert de filtre (4) dans le filtre (1), avec un ergot (28") faisant saillie radialement vers l'extérieur sur la périphérie extérieure de la sortie (26) en forme de tubulure.
